# EUROPÄISCHE PATENTSCHRIFT

(11) **EP 3 362 491 B1**
(45) Veröffentlichungstag und Bekanntmachung des Hinweises auf die Patenterteilung: **29.07.2020**
(21) Anmeldenummer: 16781764.2
(22) Anmeldetag: 12.10.2016
(51) Int. Cl.: C08G 65/336, C08G 18/10, C08G 18/75, C08G 18/22, C08G 18/28, C08G 18/48

(54) **KATALYSATORSYSTEM FÜR HÄRTBARE ZUSAMMENSETZUNGEN AUF BASIS VON SILANGRUPPEN-HALTIGEN POLYMEREN**
CATALYST SYSTEM FOR CURABLE COMPOSITIONS BASED ON POLYMERS CONTAINING SILANE GROUPS
SYSTEME DE CATALYSEUR POUR COMPOSITIONS DURCISSABLES A BASE DE POLYMERES CONTENANT DES GROUPES SILANES

(30) Priorität: 15.10.2015 EP 15190012
(43) Veröffentlichungstag der Anmeldung: 22.08.2018
(73) Patentinhaber: Sika Technology AG, 6340 Baar (CH)
(72) Erfinder: CANNAS, Rita, 8600 Dübendorf (CH); BURCKHARDT, Urs, 8049 Zürich (CH)
(74) Vertreter: Sika Patent Attorneys
(86) Internationale Anmeldenummer: PCT/EP2016/074506
(87) Internationale Veröffentlichungsnummer: WO 2017/064139

(56) Entgegenhaltungen:
- EP-A1- 1 818 368
- EP-A1- 2 100 923
- EP-A1- 2 123 720
- EP-A1- 2 338 938
- EP-A1- 2 388 297
- EP-A1- 2 813 529
- EP-A1- 2 840 087
- EP-A1- 2 930 197
- WO-A1-2015/158863
- WO-A2-2015/158859
- DE-A1-102005 051 921
- US-A1- 2011 098 392

## Beschreibung

### Technisches Gebiet

Die Erfindung betrifft die beschleunigte Vernetzung von Zusammensetzungen auf Basis von Silangruppen-haltigen Polymeren und deren Verwendung, insbesondere als Vergussmasse, Dichtstoff, Klebstoff, Belag, Beschichtung oder Anstrich.

### Stand der Technik

Bei Raumtemperatur härtbare Zusammensetzungen auf Basis von Silangruppen-haltigen Polymeren spielen eine bedeutende Rolle in vielen technischen Anwendungen, beispielsweise als Klebstoffe, Dichtstoffe oder Beschichtungen. Silangruppen-haltige Polymere sind dabei insbesondere Polyorganosiloxane, welche gemeinhin als "Silicone" bzw. "Siliconkautschuke" bezeichnet werden, und Silangruppen-haltige organische Polymere, welche auch als "silanfunktionelle Polymere", "silanmodifizierte Polymere" (SMP) oder "silanterminierte Polymere" (STP) bezeichnet werden. Ihre Vernetzung verläuft über die Kondensation von Silanolgruppen unter Ausbildung von Siloxanbindungen und wird klassischerweise mittels Organozinn-Verbindungen, wie insbesondere Dialkylzinn(IV)carboxylaten, katalysiert. Diese zeichnen sich durch eine sehr hohe Aktivität in Bezug auf die Silanol-Kondensation aus und sind sehr hydrolysebeständig; allerdings sind sie gesundheitsschädlich und stark wassergefährdend. Oft werden sie mit weiteren Katalysatoren kombiniert, hauptsächlich mit basischen Verbindungen wie insbesondere Aminen, welche vor allem die vorgeschaltete Hydrolyse der Silangruppen beschleunigen.
Aufgrund einer stärkeren Gewichtung von EHS-Aspekten durch Berufsverbände und Verbraucher sowie schärferer staatlicher Regulierung werden seit einiger Zeit vermehrt Anstrengungen unternommen, die Organozinn-Verbindungen durch andere, weniger toxische Katalysatoren zu ersetzen. So wurden etwa Organotitanate, -zirkonate und -aluminate als alternative Metall-Katalysatoren beschrieben. Diese haben aber zumeist eine geringere katalytische Aktivität in Bezug auf die Silanol-Kondensation und bewirken eine deutlich langsamere Vernetzung. Wegen ihrer mangelnden Hydrolysestabilität können sie beim Lagern der Zusammensetzung durch Restfeuchte der Inhaltsstoffe einen Grossteil ihrer Aktivität verlieren, wodurch sich die Aushärtung stark verlangsamt oder ganz zum Erliegen kommt.
Eine weitere bekannte Alternative zu Organozinn-Verbindungen stellen stark basische Stickstoff-Verbindungen aus der Klasse der Amidine und Guanidine dar, welche in Kombination mit den erwähnten Metall-Katalysatoren oder auch allein eingesetzt werden können. Allerdings kann die Wirkung solcher Katalysatoren in der Praxis durch andere Bestandteile der Zusammensetzung gestört werden. Oft wird beobachtet, dass Amidine oder Guanidine in Weichmacher- und Füllstoff-haltigen Zusammensetzungen nicht die erwartete Katalysatoraktivität entwickeln und/oder diese sich über die Lagerzeit der Zusammensetzung stark verändert. Dieser Effekt tritt verstärkt auf bei nichtflüchtigen Katalysatoren, welche aufgrund ihres geringen Geruchs bzw. niedriger Emissionen sowie ihrer niedrigen Migrationsneigung besonders vorteilhaft sind.
EP 2 123 720 A1 offenbart härtbare Zusammensetzungen auf Basis von Silangruppen-haltigen Polymeren enthaltend einen Katalysator enthaltend mindestens eine aliphatische Amidin- oder Guanidin-Gruppe. Weiterhin lehrt dieses Dokument die Verwendung von Calciumoxid als Trocknungsmittel um die Lagerstabilität im Gebinde zu erhöhen.

### Darstellung der Erfindung

Aufgabe der vorliegenden Erfindung ist es daher, ein Katalysatorsystem für härtbare Zusammensetzungen auf Basis von Silangruppen-haltigen Polymeren bereitzustellen, welches eine schnelle chemische Vernetzung bei guter Lagerstabilität ermöglicht und eine hohe Robustheit in Bezug auf die Aktivität des Katalysators aufweist.
Diese Aufgabe wird durch ein Katalysatorsystem wie in Anspruch 1 beschrieben gelöst. Das Katalysatorsystem ist wenig toxisch und weist eine hohe, über die Zeit stabil bleibende Aktivität in Bezug auf Vernetzungsreaktionen von Polymeren mit reaktiven Silangruppen auf. Das Katalysatorsystem umfasst eine mindestens eine aliphatische Amidin- oder Guanidin-Gruppe aufweisende Verbindung als Katalysator und eine basische Metallverbindung als Moderator, dadurch gekennzeichnet, dass die basische Metallverbindung ausgewählt ist aus Oxiden, Carbonaten, Hydrogencarbonaten, Silicaten, Metasilicaten, Phosphaten und Pyrophosphaten von Alkali- oder Erdalkalimetallen, wobei die basische Metallverbindung Calciumoxid enthält oder daraus besteht. Es ermöglicht eine zuverlässig hohe, über die Lagerzeit weitgehend gleichbleibende Vernetzungsgeschwindigkeit bei guter Viskositätsstabilität. Ohne Moderator wird in solchen Zusammensetzungen eine teilweise massive geringere Katalysatoraktivität beobachtet, vor allem wenn Weichmacher, Füllstoffe und/oder Pigmente vorhanden sind. Zudem wird oft eine unerwünscht deutliche Veränderung der Vernetzungsgeschwindigkeit während der Lagerung der Zusammensetzung beobachtet. Überraschenderweise wurde gefunden, dass die Robustheit des Katalysators durch die Anwesenheit der basischen Metallverbindung merklich erhöht wird.
Eine erfindungsgemäss enthaltene basische Metallverbindung ist Calciumoxid. Calciumoxid ist bekannt als Trocknungsmittel, unter anderem auch für härtbare Zusammensetzungen auf Basis von Silangruppen-haltigen Polymeren. Bei der Verwendung als Trocknungsmittel wird eine Calciumoxid-haltige Zusammensetzung aufgeheizt, sodass unter Wasseraufnahme Calciumhydroxid entsteht. Bei der Verwendung im erfindungsgemässen Katalysatorsystem hingegen wird Calciumoxid nicht zu Calciumhydroxid umgesetzt.
Bevorzugte Katalysatoren mit Polyoxyalkylen-Gerüst, welche besonders wenig flüchtig und mit Silangruppen-haltigen Polymeren besonders gut verträglich sind, profitieren besonders stark von der moderierenden Wirkung der basischen Metallverbindung. Sie ermöglichen emissions- und geruchsarme Zusammensetzungen auf Basis von Silangruppen-haltigen Polymeren mit einer hohen, über die Lagerzeit weitgehend gleichbleibenden Vernetzungsgeschwindigkeit, welche weder vor noch nach der Aushärtung zu migrationsbedingten Fehlern wie Separation, Ausschwitzen oder Substratverschmutzung neigen und welche nicht empfindlich sind auf Störungen der Katalysatoraktivität durch übliche Füllstoffe, Pigmente oder Weichmacher.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung eines Katalysatorsystems umfassend
- mindestens einen Katalysator enthaltend mindestens eine aliphatische Amidin- oder Guanidin-Gruppe, und
- mindestens einen Moderator in Form einer basischen Metallverbindung,
für die Vernetzung von Zusammensetzungen auf Basis von Silangruppen-haltigen Polymeren, dadurch gekennzeichnet, dass die basische Metallverbindung ausgewählt ist aus Oxiden, Carbonaten, Hydrogencarbonaten, Silicaten, Metasilicaten, Phosphaten und Pyrophosphaten von Alkali- oder Erdalkalimetallen, wobei die basische Metallverbindung Calciumoxid enthält oder daraus besteht.

Als "aliphatische Amidin- oder Guanidin-Gruppe" wird im vorliegenden Dokument eine Amidin-Gruppe oder eine Guanidin-Gruppe bezeichnet, welche kein Stickstoff-Atom enthält, welches direkt an einen aromatischen Ring gebunden oder Teil eines heteroaromatischen Ringsystems, wie zum Beispiel Imidazol oder Pyrimidin, ist.
Als "basische Metallverbindung" wird eine feste, in organischen Lösemitteln schwerlösliche anorganische Metallverbindung bezeichnet, die in Wasser eine basische Reaktion zeigt.
Als "primäre Aminogruppe" bzw. "primärer Amin-Stickstoff" wird eine NH₂-Gruppe bzw. deren Stickstoffatom bezeichnet, die bzw. das an einen organischen Rest gebunden ist, und als "sekundäre Aminogruppe" bzw. "sekundärer Amin-Stickstoff" wird eine NH-Gruppe bzw. deren Stickstoffatom bezeichnet, die bzw. das an zwei organische Reste, welche auch gemeinsam Teil eines Rings sein können, gebunden ist, und als "tertiäre Aminogruppe" bzw. "tertiärer Amin-Stickstoff" wird eine N-Gruppe bzw. deren Stickstoffatom bezeichnet, die bzw. das an drei organische Reste, welche auch zu zweit oder zu dritt Teil eines oder mehrerer Ringe sein können, gebunden ist.
Der Begriff "Siloxan-Rest" bezeichnet einen Rest enthaltend mindestens eine Siloxanbindung Si-O-Si.

Als "Polysiloxan-Rest" wird ein Siloxan-Rest enthaltend mehrere Siloxanbindungen in Folge, also Si-(O-Si)s-Einheiten mit s = 2 oder mehr, bezeichnet. Der Begriff "Silangruppe" bezeichnet eine an einen organischen Rest oder an einen Polysiloxan-Rest gebundene Silylgruppe mit einer bis drei, insbesondere zwei oder drei, hydrolysierbaren Substituenten am Siliciumatom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein.
Als "Hydroxysilan", "Isocyanatosilan", "Aminosilan" bzw. "Mercaptosilan" werden Organoalkoxysilane bezeichnet, die am organischen Rest zusätzlich zur Silangruppe eine oder mehrere Hydroxyl-, Isocyanato-, Amino- bzw. Mercaptogruppen aufweisen.
Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.
Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im PolymerRückgrat mehrheitlich Kohlenstoffatome aufweist, sowie Umsetzungsprodukte eines solchen Kollektivs von Makromolekülen. Polymere mit einem Polyorganosiloxan-Rückgrat (gemeinhin als "Silicone" bezeichnet) stellen keine organischen Polymere im Sinne des vorliegenden Dokuments dar.
Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.
Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.
Eine gestrichelte Linie in den Formeln in diesem Dokument stellt jeweils die Bindung zwischen einem Substituenten und dem zugehörigen Molekülrest dar.

Als "Raumtemperatur" wird eine Temperatur von ca. 23 °C bezeichnet.

Als aliphatische Amidin- oder Guanidin-Gruppe bevorzugt ist eine Amidin- oder Guanidin-Gruppe Z der Formel 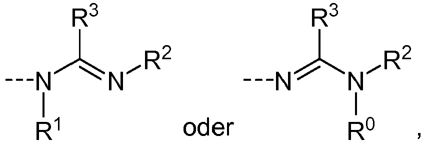 wobei
R⁰ für einen Wasserstoff-Rest oder für einen Alkyl- oder Cycloalkyl- oder Aralkyl-Rest mit 1 bis 8 C-Atomen steht,
R¹ für einen Wasserstoff-Rest oder für einen Alkyl- oder Cycloalkyl- oder Aralkyl-Rest mit 1 bis 8 C-Atomen oder zusammen mit R² für R⁶ steht,
R² für einen Wasserstoff-Rest oder für einen Alkyl-, Cycloalkyl- oder Aralkyl-Rest mit 1 bis 18 C-Atomen, welcher gegebenenfalls Ether-Sauerstoff oder tertiären Amin-Stickstoff enthält, oder zusammen mit R¹ für R⁶ steht,
R³ für -NR⁴R⁵ oder für einen Wasserstoff-Rest oder für einen Alkyl- oder Cycloalkyl- oder Aralkyl-Rest mit 1 bis 12 C-Atomen steht,
wobei
R⁴ und R⁵ unabhängig voneinander jeweils für einen Wasserstoff-Rest oder für einen Alkyl-, Cycloalkyl- oder Aralkyl-Rest mit 1 bis 18 C-Atomen, welcher gegebenenfalls Ether-Sauerstoff oder tertiären Amin-Stickstoff enthält, stehen, R⁶ für einen gegebenenfalls substituierten 1,2-Ethylen-, 1,3-Propylen- oder 1,4-Butylen-Rest mit 2 bis 12 C-Atomen steht,
wobei
R² und R⁰ auch zusammen für einen Alkylen-Rest mit 3 bis 6 C-Atomen, welcher gegebenenfalls Ether-Sauerstoff oder tertiären Amin-Stickstoff enthält, stehen können,
R² und R³ auch zusammen für einen Alkylen-Rest mit 3 bis 6 C-Atomen stehen können,
R⁴ und R⁵ auch zusammen für einen Alkylen-Rest mit 4 bis 7 C-Atomen, welcher gegebenenfalls Ether-Sauerstoff oder tertiären Amin-Stickstoff enthält enthält, stehen können, und
R² und R⁵ auch zusammen für einen Alkylen-Rest mit 2 bis 12 C-Atomen stehen können.

Die Amidin- oder Guanidin-Gruppe Z kann auch in tautomerer Form vorliegen. Alle möglichen Tautomerformen werden als gleichwertig angesehen. Weiterhin kann sie auch in protonierter Form vorliegen. Ebenfalls kann sie in komplexierter Form vorliegen, insbesondere mit Kationen von Zink, Eisen oder Molybdän.

R¹ steht bevorzugt für einen Wasserstoff-Rest oder für einen Alkyl-Rest mit 1 bis 4 C-Atomen oder zusammen mit R² für R⁶.
R² steht bevorzugt für einen Alkyl-, Cycloalkyl- oder Aralkyl-Rest mit 1 bis 12 C-Atomen, insbesondere 1 bis 8 C-Atomen, welcher gegebenenfalls einen Ether-Sauerstoff oder tertiären Amin-Stickstoff enthält, oder zusammen mit R¹ für R⁶.

In einer Ausführungsform steht Z für eine aliphatische Amidin-Gruppe. Ein Amidin-Gruppen aufweisender Katalysator weist den Vorteil auf, dass er eine nicht ganz so hohe katalytische Aktivität besitzt und deshalb in etwas höherer Menge eingesetzt werden kann, wodurch er weniger anfällig ist für Störungen durch andere Bestandteile in der Zusammensetzung.
In diesem Fall steht R³ für einen Wasserstoff-Rest oder für einen Alkyl- oder Cycloalkyl- oder Aralkyl-Rest mit 1 bis 12 C-Atomen.
R³ steht dabei bevorzugt für einen Wasserstoff-Rest oder für einen Alkyl-Rest mit 1 bis 4 C-Atomen, besonders bevorzugt für einen Wasserstoff-Rest oder Methyl-Rest.
R¹ steht in diesem Fall bevorzugt für einen Alkyl-Rest mit 1 bis 4 C-Atomen oder zusammen mit R² für R⁶.
Besonders bevorzugt stehen R¹ und R² zusammen für R⁶.

Z stellt somit insbesondere eine Amidin-Gruppe der Formel 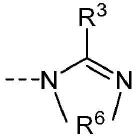 dar. Solche Amidine sind besonders einfach und in hoher Reinheit herstellbar.

R⁶ weist bevorzugt 2 bis 6 C-Atome auf.
R⁶ steht bevorzugt für 1,2-Ethylen, 1,2-Propylen, 1,3-Propylen, 2-Methyl-1,2-propylen, 2,2-Dimethyl-1,3-propylen, 1,3-Butylen, 1,4-Butylen, 1,3-Pentylen, 1,2-Cyclohexylen, 1,3-Cyclohexylen oder 2(4)-Methyl-1,3-cyclohexylen, insbesondere für 1,2-Ethylen, 1,2-Propylen, 1,3-Propylen, 2-Methyl-1,2-propylen, 2,2-Dimethyl-1,3-propylen, 1,3-Butylen oder 1,3-Pentylen, besonders bevorzugt für 1,2-Ethylen oder 1,3-Propylen, am meisten bevorzugt für 1,3-Propylen. Meist bevorzugt stehen R³ für Methyl und R⁶ für 1,3-Propylen. Eine solche Amidin-Gruppen aufweisende Verbindung weist eine besonders hohe katalytische Aktivität auf und ist besonders einfach herstellbar.

In einer bevorzugten Ausführungsform steht Z für eine aliphatische Guanidin-Gruppe. Ein Guanidin-Gruppen aufweisender Katalysator weist den Vorteil auf, dass er eine besonders hohe Aktivität besitzt.
In diesem Fall steht R³ für -NR⁴R⁵.
In diesem Fall stehen R¹ und R⁰ jeweils bevorzugt für einen Wasserstoff-Rest. R⁴ steht bevorzugt für einen Wasserstoff-Rest.
R⁵ steht bevorzugt für einen Alkyl-, Cycloalkyl- oder Aralkyl-Rest mit 1 bis 12 C-Atomen, insbesondere 1 bis 8 C-Atomen, welcher gegebenenfalls einen Ether-Sauerstoff oder tertiären Amin-Stickstoff enthält.
In einem Guanidin-Gruppen aufweisenden Katalysator stehen R¹, R⁰ und R⁴ besonders bevorzugt jeweils für einen Wasserstoff-Rest und R² und R⁵ stehen besonders bevorzugt unabhängig voneinander jeweils für einen Alkyl-, Cycloalkyl- oder Aralkyl-Rest mit 1 bis 12 C-Atomen, insbesondere 1 bis 8 C-Atomen, welcher gegebenenfalls einen Ether-Sauerstoff oder tertiären Amin-Stickstoff enthält.
Z stellt somit besonders bevorzugt eine Guanidin-Gruppe der Formel 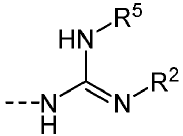 dar. Eine solcher Guanidin-Gruppen aufweisender Katalysator ist besonders einfach und in hoher Reinheit herstellbar.

Dabei stehen R² und R⁵ bevorzugt unabhängig voneinander jeweils für Ethyl, Isopropyl, tert.Butyl, 3-(Dimethylamino)propyl oder Cyclohexyl, insbesondere für Isopropyl oder Cyclohexyl.

Bevorzugt als Katalysator enthaltend mindestens eine aliphatische Amidin- oder Guanidin-Gruppe ist ein Katalysator der Formel (I),

A⁅+Z]ₙ (I)

wobei
n für eine ganze Zahl von 1 bis 20 steht,
A für einen n-wertigen aliphatischen oder cycloaliphatischen oder arylaliphatischen Kohlenwasserstoff-Rest mit 1 bis 100 C-Atomen, welcher gegebenenfalls ungesättigte Anteile enthält und gegebenenfalls Heteroatome enthält, oder für einen n-wertigen alkylterminierten Siloxan- oder Polysiloxan-Rest mit 2 bis 100 Siliciumatomen steht,
und Z für eine der beschriebenen Amidin- oder Guanidin-Gruppen steht, wobei jedes Z durch mindestens 2 C-Atome von jedem anderen Z getrennt ist.

Bevorzugt steht n für eine ganze Zahl im Bereich von 1 bis 6, insbesondere 1 bis 4. Besonders bevorzugt steht A für 2 oder 3, am meisten bevorzugt für 2.

Bevorzugt steht A für einen n-wertigen aliphatischen oder cycloaliphatischen oder arylaliphatischen Kohlenwasserstoff-Rest mit 1 bis 50 C-Atomen, welcher gegebenenfalls Ether-Sauerstoff, Hydroxylgruppen, Aminogruppen oder Silangruppen aufweist, oder für einen n-wertigen, über Kohlenstoff-gebundenen Polysiloxan-Rest mit 3 bis 50 Siliciumatomen.

Besonders bevorzugt steht A für einen n-wertigen aliphatischen oder cycloaliphatischen oder arylaliphatischen Kohlenwasserstoff-Rest mit 1 bis 20 C-Atomen.
Weiterhin besonders bevorzugt steht A für einen n-wertigen aliphatischen oder cycloaliphatischen Kohlenwasserstoff-Rest mit 4 bis 20 C-Atomen, welche mindestens zwei Ethergruppen aufweist.

Weiterhin besonders bevorzugt steht A für einen n-wertigen aliphatischen oder cycloaliphatischen Kohlenwasserstoff-Rest mit 2 bis 12 C-Atomen, welche mindestens eine Hydroxylgruppe oder primäre oder sekundäre Aminogruppe aufweist.
Weiterhin besonders bevorzugt steht A für einen n-wertigen aliphatischen oder cycloaliphatischen oder arylaliphatischen Kohlenwasserstoff-Rest mit 4 bis 12 C-Atomen, welche mindestens eine tertiäre Aminogruppe aufweist.
Weiterhin besonders bevorzugt steht A für einen n-wertigen Kohlenstoff-gebundenen Polysiloxan-Rest mit 4 bis 20 Silicium-Atomen.

Bevorzugte Ausführungsformen des Katalysators enthaltend mindestens eine aliphatische Amidin- oder Guanidin-Gruppe sind besonders einfach zugänglich, besonders gut herstellbar und/oder besonders aktiv.

Ganz besonders bevorzugt steht A für einen zweiwertigen aliphatischen oder cycloaliphatischen oder arylaliphatischen Kohlenwasserstoff-Rest mit 2 bis 12 C-Atomen, insbesondere ausgewählt aus 1,2-Ethylen, 1,2-Propylen, 1,3-Propylen, 1,4-Butylen, 1,3-Butylen, 1,2-Butylen, 2,3-Butylen, 1,3-Pentylen, 2-Methyl-1,5-pentylen, 1,6-Hexylen, 2,2(4),4-Trimethyl-1,6-hexamethylen,1,8-Octylen, 1,10-Decylen, 1,12-Dodecylen, (1,5,5-Trimethylcyclohexan-1-yl)methan-1,3, 1,3-Cyclohexylenbis(methylen), 1,4-Cyclohexylenbis(methylen), 1,3-Phenylenbis(methylen) und 2- und/oder 4-Methyl-1,3-cyclohexylen.
Solche Katalysatoren der Formel (I) sind geruchsarm, emissionsarm, gut zugänglich und besonders aktiv.

Am meisten bevorzugt steht A für einen n-wertigen Polyoxyalkylen-Rest oder für einen Rest einer polyoxyalkylierten Verbindung mit jeweils einem mittleren Molekulargewicht im Bereich von 180 bis 500 g/mol und n steht für 1 oder 2 oder 3, insbesondere für 2.
Ein solcher Katalysator der Formel (I) ist bei Raumtemperatur weitgehend geruchlos und nicht flüchtig und profitiert besonders stark von der ausgleichenden Wirkung der basischen Metallverbindung auf die Vernetzungsgeschwindigkeit. Er ist sowohl vor als auch nach der Aushärtung ausgezeichnet verträglich mit Zusammensetzungen auf Basis von Silangruppen-haltigen Polymeren und neigt weder zu Separierung noch zu Migration. Er ermöglicht emissions- und geruchsarme Produkte, welche weder schmierige oder klebrige Oberflächen aufweisen noch Substratverschmutzung verursachen.

Besonders bevorzugt ist ein Katalysator der Formel (I), bei welchem n für 1 oder 2 oder 3, A für einen Polyoxyalkylen-Rest oder für einen Rest einer polyoxyalkylierten Verbindung mit jeweils einem mittleren Molekulargewicht im Bereich von 180 bis 500 g/mol und Z für eine Guanidin-Gruppe der Formel 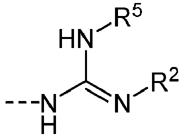 stehen, wobei R² und R⁵ die bereits genannten Bedeutungen aufweisen.

Bevorzugt steht n dabei für 2.
Bevorzugt steht A dabei für einen Polyoxypropylen-Rest, gegebenenfalls mit Anteilen anderer Oxyalkylen-Einheiten wie insbesondere Oxyethylen- oder 1,2-Oxybutylen-Einheiten, oder für einen Poly(oxytetramethylen)-Rest, gebenenfalls mit Anteilen von 1,2-Oxypropylen-Einheiten, oder für einen ein- bis dreiwertigen Rest einer polyoxyalkylierten Verbindung aus der Polyaddition von 1,2-Propylenoxid an Startermoleküle ausgewählt aus der Gruppe bestehend aus Alkoholen, Fettalkoholen, Alkylphenolen, Diolen und Triolen.
Bevorzugt ist A dabei weitgehend frei von Aminogruppen und/oder Hydroxylgruppen.

Insbesondere ist der Katalysator der Formel (I) ausgewählt aus der Gruppe bestehend aus 1,1'-(Ethylen)bis(2,3-diisopropylguanidin), 1,1'-(Ethylen)bis(2,3-dicyclohexylguanidin), 1,1'-(1,2-Propylen)bis(2,3-diisopropylguanidin), 1,1'-(1,2-Propylen)bis(2,3-dicyclohexylguanidin), 1,1'-(1,3-Propylen)bis(2,3-diisopropylguanidin), 1,1'-(1,3-Propylen)bis(2,3-dicyclohexylguanidin), 1,1'-(1,4-Butylen)-bis(2,3-diisopropylguanidin), 1,1'-(1,4-Butylen)bis(2,3-dicyclohexylguanidin), 1,1'-(1,3-Butylen)bis(2,3-diisopropylguanidin), 1,1'-(1,3-Butylen)bis(2,3-dicyclohexylguanidin), 1,1'-(1,2-Butylen)bis(2,3-diisopropylguanidin), 1,1'-(1,2-Butylen)bis(2,3-dicyclohexylguanidin), 1,1'-(2,3-Butylen)bis(2,3-diisopropylguanidin), 1,1'-(2,3-Butylen)bis(2,3-dicyclohexylguanidin), 1,1'-(1,3-Pentylen)bis(2,3-diisopropylguanidin), 1,1'-(1,3-Pentylen)bis(2,3-dicyclohexylguanidin), 1,1'-(2-Methyl-1,5-pentylen)bis(2,3-diisopropylguanidin), 1,1'-(2-Methyl-1,5-pentylen)-bis(2,3-dicyclohexylguanidin), 1,1'-(1,6-Hexylen)bis(2,3-diisopropylguanidin), 1,1'-(1,6-Hexylen)bis(2,3-dicyclohexylguanidin), 1,1'-(2,2(4),4-Trimethyl-1,6-hexamethylen)bis(2,3-diisopropylguanidin), 1,1'-(2,2(4),4-Trimethyl-1,6-hexamethylen)bis(2,3-dicyclohexylguanidin), 1,1'-(1,8-Octylen)bis(2,3-diisopropylguanidin), 1,1'-(1,8-Octylen)bis(2,3-dicyclohexylguanidin), 1,1'-(1,10-Decylen)bis-(2,3-diisopropylguanidin), 1,1'-(1,10-Decylen)bis(2,3-dicyclohexylguanidin), 1,1'-(1,12-Dodecylen)bis(2,3-diisopropylguanidin), 1,1'-(1,12-Dodecylen)bis-(2,3-dicyclohexylguanidin), 1-((5-(2,3-Diisopropylguanidino)-1,3,3-trimethylcyclohexyl)methyl)-2,3-diisopropylguanidin, 1-((5-(2,3-Dicyclohexylguanidino)-1,3,3-trimethylcyclohexyl)methyl)-2,3-dicyclohexylguanidin, 1,1'-(1,3-Cyclohexylenbis(methylen))bis(2,3-diisopropylguanidin), 1,1'-(1,3-Cyclohexylenbis(methylen))bis(2,3-dicyclohexylguanidin), 1,1'-(1,4-Cyclohexylen-bis(methylen))bis-(2,3-diisopropylguanidin), 1,1'-(1,4-Cyclohexylen-bis(methylen))bis(2,3-dicyclohexylguanidin), 1,1'-(1,3-Phenylen-bis(methylen))bis(2,3-diisopropylguanidin), 1,1'-(1,3-Phenylen-bis(methylen))bis(2,3-dicyclohexylguanidin), 1,1'-(2- und/oder 4-Methyl-1,3-cyclohexylen)bis(2,3-diisopropylguanidin), 1,1'-(2- und/oder 4-Methyl-1,3-cyclohexylen)bis(2,3-dicyclohexylguanidin), 1,1'-(α,ω-Polyoxypropylen)bis(2,3-diisopropylguanidin) mit einem Molekulargewicht im Bereich von etwa 465 bis 785 g/mol und 1,1'-(α,ω)-Polyoxypropylen)bis(2,3-dicyclohexylguanidin) mit einem Molekulargewicht im Bereich von etwa 625 bis 1'000 g/mol.
Diese Katalysatoren der Formel (I) sind geruchsarm, emissionsarm, gut zugänglich und besonders aktiv.

Davon besonders bevorzugt ist 1,1'-(α,ω)-Polyoxypropylen)bis(2,3-diisopropylguanidin) mit einem Molekulargewicht im Bereich von etwa 465 bis 785 g/mol oder 1,1'-(α,ω-Polyoxypropylen)bis(2,3-dicyclohexylguanidin) mit einem Molekulargewicht im Bereich von etwa 625 bis 1'000 g/mol.

Diese Katalysatoren der Formel (I) ermöglichen emissions- und geruchsarme Zusammensetzungen mit einer hohen, über die Lagerzeit weitgehend gleichbleibenden Vernetzungsgeschwindigkeit, welche weder vor noch nach der Aushärtung zu migrationsbedingten Fehlern wie Separation, Ausschwitzen oder Substratverschmutzung neigen und profitieren besonders stark von der moderierenden Wirkund der basischen Metallverbindung.

Ein Katalysator der Formel (I) wird insbesondere erhalten durch die Umsetzung von mindestens einem geeigneten Amin mit mindestens einem Reagens zur Einführung einer Amidin- oder Guanidin-Gruppe ausgewählt aus der Gruppe bestehend aus Orthoestern, 1,3-Ketoestern, 1,3-Ketoamiden, Nitrilen, Imidsäureestern, Imidsäurechloriden, Amiden, Lactamen, Cyanamid, Carbodiimiden, Harnstoffen, O-Alkylisoharnstoffen, Thioharnstoffen, S-Alkylisothioharnstoffe, Aminoiminomethansulfonsäuren, Guanylpyrazolen und Guanidinen.

Ein Katalysator der Fprmel (I), bei welchem Z für eine Guanidin-Gruppe der Formel 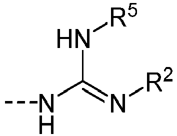 steht, wird insbesondere erhalten durch die Umsetzung von mindestens einem Amin der Formel A-(NH₂)ₙ mit mindestens einem Carbodiimid der Formel R⁵-N=C=N-R².

Die Umsetzung des Polyamins mit dem Carbodiimid wird bevorzugt bei erhöhter Temperatur, insbesondere bei 60 bis 140 °C, durchgeführt. Die Umsetzung kann ganz ohne die Verwendung von VOC-Lösemitteln erfolgen, gegebenenfalls in Anwesenheit eines Katalysators, insbesondere einer Säure oder LewisSäure.
Bei der Umsetzung wird bevorzugt höchstens soviel Carbodiimid eingesetzt, dass pro Equivalent Guanidin-Gruppe, die gebildet werden soll, höchstens ein mol Carbodiimid vorhanden ist. Insbesondere wird das Carbodiimid stöchiometrisch in Bezug auf die primären Aminogruppen des Amins eingesetzt. Auf diese Weise ist der erhaltene Katalysator der Formel (I) weitgehend frei von primären Aminogruppen.
Das Reaktionsprodukt aus diesem Verfahren wird bevorzugt ohne Aufarbeitung und/oder Reinigung in der Zusammensetzung verwendet, mit Ausnahme der destillativen Entfernung von flüchtigen Verbindungen, gegebenenfalls unter Vakuum.

Als Carbodiimid eignen sich typischerweise aliphatische, cycloaliphatische oder arylaliphatische Carbodiimide, insbesondere einfache, im Handel erhältliche aliphatische und cycloaliphatische Carbodiimide, bevorzugt N,N'-Diisopropylcarbodiimid (DIC), N,N'-Di-tert.butylcarbodiimid, N,N'-Dicyclohexylcarbodiimid (DCC) oder N-Ethyl-N'-(3-dimethylaminopropyl)carbodiimid (EDC), besonders bevorzugt N,N'-Diisopropylcarbodiimid (DIC) oder N,N'-Dicyclohexylcarbodiimid (DCC), insbesondere DCC.

Als Amin eignen sich handelsübliche aliphatische, cycloaliphatische oder arylaliphatische Amine mit 1 bis 100 C-Atomen, welche gegebenenfalls Heteroatome, insbesondere Hydroxylgruppen, Mercaptogruppen, weitere Aminogruppen, Ethergruppen oder Silangruppen, aufweisen, oder Alkylaminogruppen aufweisende Polysiloxane.

Bevorzugte Amine sind insbesondere n-Hexylamin, n-Octylamin, 2-Ethylhexylamin, n-Decylamin, Laurylamin, Cyclohexylamin, Benzylamin, 2-Methoxyethylamin, 3-Methoxypropylamin, 1-Amino-2-propanol, 3-Amino-1-propanol, 2-Amino-2-methyl-1-propanol, 2-(2-Aminoethoxy)ethanol, 3-Aminopropyltrimethoxysilan, 3-Aminopropyltriethoxysilan, 3-Aminopropyldimethoxymethylsilan, N-(2-Aminoethyl)-3-aminopropyltrimethoxysilan, N-(2-Aminoethyl)-3-aminopropyltriethoxysilan, 1,2-Ethandiamin, 1,3-Propandiamin, 1,2-Propandiamin, 1,4-Butandiamin, 1,3-Butandiamin, 1,2-Butandiamin, 2,3-Butandiamin, 1,3-Pentandiamin (DAMP), 1,5-Diamino-2-methylpentan (MPMD), 1,6-Hexandiamin, 2,2,4- und 2,4,4-Trimethylhexamethylendiamin (TMD), 1,8-Octandiamin, 1,10-Decandiamin, 1,12-Dodecandiamin, 1-Amino-3-aminomethyl-3,5,5-trimethylcyclohexan (= Isophorondiamin oder IPD), 1,3-Bis(aminomethyl)cyclohexan, 1,4-Bis-(aminomethyl)cyclohexan,1,3-Bis(aminomethyl)benzol, 2- und 4-Methyl-1,3-diaminocyclohexan und Mischungen davon, N,N-Bis(3-aminopropyl)methylamin, N,N-Bis(3-aminopropyl)ethylamin, Diethylentriamin (DETA), Triethylentetramin (TETA), Tetraethylenpentamin (TEPA), Dipropylentriamin (DPTA), N-(2-Aminoethyl)-1,3-propandiamin (N3-Amin), N,N'-Bis(3-aminopropyl)ethylendiamin (N4-Amin), Bis-hexamethylentriamin (BHMT), N,N'-Bis(aminoethyl)piperazin, N,N'-Bis(aminopropyl)piperazin, Bis-(2-aminoethyl)ether, 3,6-Dioxaoctan-1,8-diamin, 4,7-Dioxadecan-1,10-diamin, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin, cycloaliphatische ethergruppenhaltige Diamine aus der Propoxylierung und nachfolgenden Aminierung von 1,4-Dimethylolcyclohexan, erhältlich insbesondere als Jeffamine® RFD-270 (von Huntsman), Polyoxyalkylenamine mit einem mittleren Molekulargewicht im Bereich von 200 bis 2000 g/mol, wie sie im Handel beispielsweise unter den Handelsnamen Jeffamine® (von Huntsman), Polyetheramine (von BASF) oder PC Amine® (von Nitroil) erhältlich sind, insbesondere Jeffamine® M-600, Jeffamine® D-230, Jeffamine® D-400, Jeffamine® D-2000, Jeffamine® XTJ-582, Jeffamine® XTJ-578, Jeffamine® HK-511, Jeffamine® ED-600, Jeffamine® ED-900, Jeffamine® ED-2003, Jeffamine® XTJ-569, Jeffamine® XTJ-533, Jeffamine® XTJ-536, Jeffamine® THF-100, Jeffamine® THF-170, Jeffamine® THF-140, Jeffamine® THF-230, Jeffamine® SD-231, Jeffamine® SD-401, Jeffamine® SD-2001, Jeffamine® T-403, Jeffamine® XTJ-566 oder Jeffamine® ST-404 (alle von Huntsman), oder dazu analoge Typen von BASF oder Nitroil, sowie weiterhin kommerziell erhältliche Polysiloxanamine wie insbesondere Dynasylan® 1146 (von Evonik), Silquest® Y15744 (von Momentive), X-40-2651 (von Shin-Etsu), Z-6184 Silane (von Dow Corning), Silaplane® FM-3311, Silaplane® FM-3322, Silaplane® FM-3325 (alle von Chisso), Wacker® Aminöl SLM 92502, Wacker® Aminöl SLM 92503, Wacker® Aminöl SLM 92507, Wacker® Aminöl SLM 446011-20 VP, Wacker® Aminöl SLM 446011-50 VP, Wacker® L 653, Wacker® L 655, Wacker® L 656, Wacker® FINISH WR 1100, Wacker® FINISH WT 1650 (alle von Wacker) oder Reactive Silicone Fluids KF-393, KF-857, KF-858, KF-859, KF-860, KF-861, KF-862, KF-864, KF-865, KF-867, KF-868, KF-869, KF-880, KF-8001, KF-8002, KF-8004, KF-8005, X-22-3820W, KF-8008, KF-8010, KF-8012, X-22-161A, X-22-161B, X-22-1660B-3 oder X-22-9192 (alle von Shin Etsu).

Besonders bevorzugt ist das Amin ausgewählt aus 1,2-Ethandiamin, 1,2-Propandiamin, 1,3-Propandiamin, 1,4-Butandiamin, 1,3-Butandiamin, 1,2-Butandiamin, 2,3-Butandiamin, 1,3-Pentandiamin (DAMP), 1,5-Diamino-2-methylpentan (MPMD), 1,6-Hexandiamin, 2,2(4),4-Trimethylhexamethylendiamin (TMD), 1,8-Octandiamin, 1,10-Decandiamin, 1,12-Dodecandiamin, 1-Amino-3-aminomethyl-3,5,5-trimethylcyclohexan (= Isophorondiamin oder IPD), 1,3-Bis(aminomethyl)cyclohexan, 1,4-Bis(aminomethyl)cyclohexan,1,3-Bis(aminomethyl)-benzol und 2- und/oder 4-Methyl-1,3-diaminocyclohexan.

Weiterhin besonders bevorzugt ist das Amin ein Polyoxypropylendiamin mit einem Molekulargewicht im Bereich von etwa 210 bis 500 g/mol, insbesondere Jeffamine® D-230 oder Jeffamine® D-400 (von Huntsman) oder dazu analoge Typen von BASF oder Nitroil.

Ein Verfahren zur Herstellung eines Katalysators der Formel (I) kann insbesondere auch "in situ", d.h. in Gegenwart des Silangruppen-haltigen Polymers, durchgeführt werden. Dazu werden das Polyamin und Reagens zur Einführung einer Amidin- oder Guanidin-Gruppe mit dem Silangruppen-haltigen Polymer vermischt und bei einer Temperatur im Bereich von 40 bis 120 °C umgesetzt. Die in situ-Umsetzung kann insbesondere auch in Gegenwart weiterer Inhaltsstoffe, wie sie für Zusammensetzungen auf Basis Silangruppen-haltiger Polymere typisch sind, durchgeführt werden.
Besonders bevorzugt ist dieses Verfahren für die Umsetzung eines Amins mit einem Carbodiimid.

In einer Ausführung der Erfindung ist der Katalysator enthaltend mindestens eine aliphatische Amidin- oder Guanidin-Gruppe ein Umsetzungsprodukt aus mindestens einem Katalysator der Formel (I), welcher mindestens eine Hydroxylgruppe oder Mercaptogruppe oder sekundäre oder primäre Aminogruppe aufweist, mit mindestens einer funktionellen Verbindung, welche mindestens eine mit Hydroxylgruppen oder Mercaptogruppen oder primären oder sekundären Aminogruppen reaktive funktionelle Gruppe enthält.
Geeignete funktionelle Verbindungen sind dabei insbesondere Epoxide, Aziridine, Carbonate, Carbonsäureanhydride, Carbonsäuren, Carbonsäureester, Lactone, Carbonsäurechloride, Ketone, Aldehyde, 1,3-Diketone, 1,3-Ketoester, 1,3-Ketoamide, Cyanate, Thiocyanate, Isocyanate, Isothiocyanate, (Meth)acrylate, (Meth)acrylamide, (Meth)acrylnitrile, Maleate, Maleamide, Maleimide, Fumarate, Fumaramide, Itaconate, Itaconamide, Crotonate, Crotonamide oder Silane.

Die basische Metallverbindung liegt bevorzugt in feinteiliger Form mit einer spezifischen Oberfläche von grösser als 30 m²/g (gemessen nach BET) vor. Insbesondere weist sie einen mittleren Teilchendurchmesser im Bereich von 0.1 bis 50 µm, insbesondere 0.3 bis 30 µm, auf. Somit lässt sie sich in eine flüssige bis pastöse Masse makroskopisch gesehen homogen einmischen.

Die basische Metallverbindung kann in Form eines Pulvers oder in dispergierter Form als Paste vorliegen.

Bevorzugt katalysiert die basische Metallverbindung für sich allein die Vernetzungsreaktion von Silangruppen nicht oder nur in unbedeutender Weise.

Die basische Metallverbindung ist ausgewählt aus Oxiden, Carbonaten, Hydrogencarbonaten, Silicaten, Metasilicaten, Phosphaten und Pyrophosphaten von Alkali- oder Erdalkalimetallen, wobei die basische Metallverbindung Calciumoxid enthält oder daraus besteht.
Davon bevorzugt ist Natriumcarbonat, Kaliumcarbonat, Magnesiumoxid oder Calciumoxid in Reinform oder in Form von solche Verbindungen enthaltenden Substanzen, beispielsweise Zementen, insbesondere Portland-Zement. Diese Verbindungen sind in Form von feinen Pulvern einfach erhältlich und zeigen eine besonders gute Wirkung als Moderator im beschriebenen Katalysatorsystem.

Die basische Metallverbindung enthält oder besteht aus Calciumoxid oder Calciumoxid-enthaltende Substanzen. Calciumoxid zeigt eine ganz besonders gute Wirkung als Moderator im beschriebenen Katalysatorsystem. Mit Calciumoxid wird eine schnelle Vernetzung von Zusammensetzungen auf Basis von Silangruppen-haltigen Polymeren erreicht, wobei die Vernetzungsgeschwindigkeit einer gelagerten Zusammensetzung im Vergleich zu einer frisch hergestellten nahezu gleich bleibt.

Besonders bevorzugt sind als Trocknungsmittel im Handel erhältliche feinteilige Calciumoxide oder Calciumoxid-Dispersionen, wie beispielsweise Caloxol® CP2, Caloxol® W3 oder Caloxol® CPA (alle von Omya), Desical® P (von Hexpol Compounding) oder Rhenosorb C oder Rhenosorb F (von Rhein-Chemie). Dabei wird Calciumoxid aber nicht, wie beim Einsatz als Trocknungsmittel, in der Zusammensetzung erwärmt und dabei durch Aufnahme von Wasser zu Calciumhydroxid umgesetzt, sondern es wirkt direkt in der Form von Calciumoxid als Moderator.

Im beschriebenen Katalysatorsystem liegt das Gewichtsverhältnis zwischen der basischen Metallverbindung und dem mindestens eine aliphatische Amidin- oder Guanidin-Gruppe enthaltenden Katalysator bevorzugt im Bereich von 0.1/1 bis 20/1, bevorzugt 0.2/1 bis 10/1, insbesondere 0.3/1 bis 5/1.

Das beschriebene Katalysatorsystem wird verwendet für die Vernetzung von Zusammensetzungen auf Basis von Silangruppen-haltigen Polymeren.

Das Silangruppen-haltige Polymer ist insbesondere ausgewählt aus der Gruppe bestehend aus Polyorganosiloxanen mit endständigen Silangruppen und Silangruppen-haltigen organischen Polymeren.
Ein Polyorganosiloxan mit endständigen Silangruppen weist den Vorteil auf, dass es im ausgehärteten Zustand besonders wasser- und lichtbeständig ist und besonders weichelastische Eigenschaften ermöglicht.
Ein Silangruppen-haltiges organisches Polymer weist den Vorteil auf, dass es besonders gute Haftungseigenschaften auf einer Vielzahl von Untergründen aufweist und besonders kostengünstig ist.

Ein bevorzugtes Polyorganosiloxan mit endständigen Silangruppen weist die Formel (IV) auf, 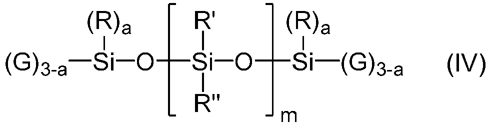 wobei
R, R' und R" unabhängig voneinander jeweils für einen einwertigen Kohlenwasserstoff-Rest mit 1 bis 12 C-Atomen stehen;
G für einen Hydroxyl-Rest oder für einen Alkoxy-, Acetoxy-, Ketoximato-, Amido- oder Enoxy-Rest mit 1 bis 13 C-Atomen steht;
a für 0, 1 oder 2 steht; und
m für eine ganze Zahl im Bereich von 50 bis etwa 2'500 steht.

R steht bevorzugt für Methyl, Vinyl oder Phenyl.
R' und R" stehen bevorzugt unabhängig voneinander jeweils für einen Alkylrest mit 1 bis 5, bevorzugt 1 bis 3 C-Atomen, insbesondere für Methyl.
G steht bevorzugt für einen Hydroxyl-Rest oder für einen Alkoxy- oder Ketoximato-Rest mit 1 bis 6 C-Atomen, insbesondere für einen Hydroxyl-, Methoxy-, Ethoxy-, Methylethylketoximato- oder Methylisobutylketoximato-Rest. Besonders bevorzugt steht G für einen Hydroxylrest.
a steht bevorzugt für 0 oder 1, insbesondere für 0.
Weiterhin ist m bevorzugt so gewählt, dass das Polyorganosiloxan der Formel (IV) bei Raumtemperatur eine Viskosität im Bereich von 100 bis 500'000 mPa·s, insbesondere von 1000 bis 100'000 mPa·s, aufweist.

Polyorganosiloxane der Formel (IV) sind gut handhabbar und vernetzen mit Feuchtigkeit und/oder Silanvernetzern zu festen Silicon-Polymeren mit elastischen Eigenschaften.
Geeignete kommerziell erhältliche Polyorganosiloxane der Formel (IV) sind beispielsweise erhältlich von Wacker, Momentive Performance Material, GE Advanced Materials, Dow Corning, Bayer oder Shin Etsu.

Ein bevorzugtes Silangruppen-haltiges organisches Polymer ist ein Polyolefin oder ein Polyester oder ein Polyamid oder ein Poly(meth)acrylat oder ein Polyether oder eine Mischform dieser Polymere, welches jeweils eine oder bevorzugt mehrere Silangruppen trägt. Die Silangruppen können seitlich in der Kette oder endständig stehen und sind über ein C-Atom an das organische Polymer gebunden.
Besonders bevorzugt ist das Silangruppen-haltige organische Polymer ein Silangruppen-haltiges Polyolefin oder ein Silangruppen-haltiger Polyester oder ein Silangruppen-haltiges Poly(meth)acrylat oder ein Silangruppen-haltiger Polyether oder eine Mischform dieser Polymere.

Das Silangruppen-haltige organische Polymer weist als Silangruppen bevorzugt Alkoxysilangruppen auf, insbesondere Alkoxysilangruppen der Formel (VI), 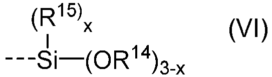 wobei
R¹⁴ für einen linearen oder verzweigten, einwertigen Kohlenwasserstoffrest mit 1 bis 5 C-Atomen, insbesondere für Methyl oder für Ethyl oder für Isopropyl, steht;
R¹⁵ für einen linearen oder verzweigten, einwertigen Kohlenwasserstoffrest mit 1 bis 8 C-Atomen, insbesondere für Methyl oder für Ethyl, steht; und
x für einen Wert von 0 oder 1 oder 2, bevorzugt für 0 oder 1, insbesondere für 0, steht.
Besonders bevorzugt steht R¹⁴ für Methyl oder für Ethyl.
Für bestimmte Anwendungen steht der Rest R¹⁴ bevorzugt für eine Ethylgruppe, da in diesem Fall bei der Aushärtung der Zusammensetzung ökologisch und toxikologisch harmloses Ethanol freigesetzt wird.
Besonders bevorzugt sind Trimethoxysilangruppen, Dimethoxymethylsilangruppen oder Triethoxysilangruppen.
Dabei weisen Methoxysilangruppen den Vorteil auf, dass sie besonders reaktiv sind, und Ethoxysilangruppen weisen den Vorteil auf, dass sie toxikologisch vorteilhaft und besonders lagerstabil sind.

Das Silangruppen-haltige organische Polymer weist im Mittel bevorzugt 1.3 bis 4, insbesondere 1.5 bis 3, besonders bevorzugt 1.7 bis 2.8, Silangruppen pro Molekül auf. Die Silangruppen sind bevorzugt endständig.
Das Silangruppen-haltige organische Polymer weist bevorzugt ein mittleres Molekulargewicht, bestimmt mittels GPC gegenüber Polystyrol-Standard, im Bereich von 1'000 bis 30'000 g/mol, insbesondere von 2'000 bis 20'000 g/mol, auf. Das Silangruppen-haltige organische Polymer weist bevorzugt ein Silan-Equivalentgewicht von 300 bis 25'000 g/Eq, insbesondere von 500 bis 15'000 g/Eq, auf.

Das Silangruppen-haltige organische Polymer kann bei Raumtemperatur fest oder flüssig vorliegen. Bevorzugt ist es bei Raumtemperatur flüssig.

Am meisten bevorzugt ist das Silangruppen-haltige organische Polymer ein bei Raumtemperatur flüssiger Silangruppen-haltiger Polyether, wobei die Silangruppen insbesondere Dialkoxysilangruppen und/oder Trialkoxysilangruppen, besonders bevorzugt Trimethoxysilangruppen oder Triethoxysilangruppen, sind.

Verfahren zur Herstellung von Silangruppen-haltigen Polyethern sind dem Fachmann bekannt.
In einem bevorzugten Verfahren sind Silangruppen-haltige Polyether erhältlich aus der Umsetzung von Allylgruppen-haltigen Polyethern mit Hydrosilanen, gegebenenfalls unter Kettenverlängerung mit beispielsweise Diisocyanaten.
In einem weiteren bevorzugten Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.
In einem weiteren bevorzugten Verfahren sind Silangruppen-haltige Polyether erhältlich aus der Umsetzung von Polyetherpolyolen mit Isocyanatosilanen, gegebenenfalls unter Kettenverlängerung mit Diisocyanaten.
In einem weiteren bevorzugten Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, ein niedriges Elastizitätsmodul, ein tiefer Glasübergangspunkt oder eine hohe Witterungsbeständigkeit.

Besonders bevorzugt ist der Silangruppen-haltige Polyether erhältlich aus der Umsetzung von NCO-terminierten Urethan-Polyethern mit Aminosilanen oder Hydroxysilanen. Geeignete NCO-terminierte Urethan-Polyether sind erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit einer überstöchiometrischen Menge an Polyisocyanaten, insbesondere Diisocyanaten.

Als Silangruppen-haltige Polyether sind auch kommerziell erhältliche Produkte geeignet, insbesondere die Folgenden: MS Polymer™ (von Kaneka Corp.; insbesondere die Typen S203H, S303H, S227, S810, MA903 und S943); MS Polymer™ bzw. Silyl™ (von Kaneka Corp.; insbesondere die Typen SAT010, SAT030, SAT200, SAX350, SAX400, SAX725, MAX450, MAX951); Excestar® (von Asahi Glass Co. Ltd.; insbesondere die Typen S2410, S2420, S3430, S3630); SPUR+* (von Momentive Performance Materials; insbesondere die Typen 1010LM, 1015LM, 1050MM); Vorasil™ (von Dow Chemical Co.; insbesondere die Typen 602 und 604); Desmoseal® (von Bayer MaterialScience AG; insbesondere die Typen S XP 2458, S XP 2636, S XP 2749, S XP 2774 und S XP 2821), TEGOPAC® (von Evonik Industries AG; insbesondere die Typen Seal 100, Bond 150, Bond 250), Polymer ST (von Hanse Chemie AG/Evonik Industries AG, insbesondere die Typen 47, 48, 61, 61LV, 77, 80, 81); Geniosil® STP (von Wacker Chemie AG; insbesondere die Typen E10, E15, E30, E35).

Ein weiterer Gegenstand der Erfindung ist eine härtbare Zusammensetzung enthaltend mindestens ein Silangruppen-haltiges Polymer und ein Katalysatorsystem umfassend (i) mindestens einen Katalysator enthaltend mindestens eine aliphatische Amidin- oder Guanidin-Gruppe und (ii) mindestens einen Moderator in Form einer basischen Metallverbindung, wie vorgängig beschrieben.

Bevorzugt stellt die härtbare Zusammensetzung einen Klebstoff oder einen Dichtstoff oder eine Beschichtung dar.

Das Silangruppen-haltige Polymer ist in einer bevorzugten Ausführungsform ein Polyorganosiloxan mit endständigen Silangruppen, insbesondere ein Polyorganosiloxan mit endständigen Silangruppen der Formel (IV), wie vorgängig beschrieben.
Bevorzugt enthält eine solche Zusammensetzung zusätzlich einen Silanvernetzer, insbesondere ein Silan der Formel (V),

(R'")_{q}-Si-(G')_{4-q} (V)

wobei
R'" für einen einwertigen Kohlenwasserstoff-Rest mit 1 bis 12 C-Atomen steht,
G' für einen Hydroxyl-Rest oder für einen Alkoxy-, Acetoxy-, Ketoximato-, Amido- oder Enoxy-Rest mit 1 bis 13 C-Atomen steht; und
q für einen Wert von 0, 1 oder 2, insbesondere für 0 oder 1, steht.

Besonders geeignete Silane der Formel (V) sind Methyltrimethoxysilan, Ethyltrimethoxysilan, Propytrimethoxysilan, Vinyltrimethoxysilan, Methyltriethoxysilan, Vinyltriethoxysilan, Phenyltriethoxysilan, Tetramethoxysilan, Tetraethoxysilan, Methyltris(methylethylketoximo)silan, Vinyltris(methylethylketoximo)silan und Methyltris(isobutylketoximo)silan.

Das Silangruppen-haltige Polymer ist in einer weiteren bevorzugten Ausführungsform ein Silangruppen-haltiges organisches Polymer wie vorgängig beschrieben, insbesondere ein bei Raumtemperatur flüssiger Silangruppen-haltiger Polyether, wie vorgängig beschrieben.

Bevorzugt ist der mindestens eine aliphatische Amidin- oder Guanidin-Gruppe enthaltende Katalysator in der Zusammensetzung in einer solchen Menge vorhanden, dass die Konzentration an Amidin- oder Guanidin-Gruppen bezogen auf die Menge des Silangruppen-haltigen Polymers im Bereich von 0.05 bis 20 mmol/100 g Polymer, bevorzugt 0.1 bis 15 mmol/100 g Polymer, insbesondere 0.1 bis 10 mmol/100 g Polymer, liegt.
Eine solche Zusammensetzung weist eine gute Lagerfähigkeit und eine schnelle Aushärtung auf.

Zusätzlich zum beschriebenen Katalysatorsystem kann die Zusammensetzung weitere Katalysatoren, insbesondere für die Vernetzung von Silangruppen, enthalten. Als weitere Katalysatoren geeignet sind insbesondere Metall-Verbindungen und/oder basische Stickstoff- oder Phosphorverbindungen. Geeignete Metall-Verbindungen sind insbesondere Verbindungen von Zinn, Titan, Zirkonium, Aluminium oder Zink, insbesondere Diorganozinn(IV)-Verbindungen wie insbesondere Dibutylzinn(IV)-diacetat, Dibutylzinn(IV)-dilaurat, Dibutylzinn(IV)-dineodecanoat oder Dibutylzinn(IV)-bis(acetylacetonat) und Dioctylzinn(IV)-dilaurat, sowie Titan(IV)- oder Zirkonium(IV)- oder Aluminium(III)- oder Zink(II)-Komplexe mit insbesondere Alkoxy-, Carboxylat-, 1,3-Diketonat-, 1,3-Ketoesterat- oder 1,3-Ketoamidat-Liganden.
Geeignete basische Stickstoff- oder Phosphorverbindungen sind insbesondere Imidazole, Pyridine, Phosphazen-Basen oder bevorzugt Amine, Hexahydrotriazine oder Biguanide.
Geeignete Amine sind insbesondere Alkyl-, Cycloalkyl- oder Aralkylamine wie Triethylamin, Triisopropylamin, 1-Butylamin, 2-Butylamin, tert.Butylamin, 3-Methyl-1-butylamin, 3-Methyl-2-butylamin, Dibutylamin, Tributylamin, Hexylamin, Dihexylamin, Cyclohexylamin, Dicyclohexylamin, Dimethylcyclohexylamin, Benzylamin, Dibenzylamin, Dimethylbenzylamin, Octylamin, 2-Ethylhexylamin, Di-(2-ethylhexyl)amin, Laurylamin, N,N-Dimethyl-laurylamin, Stearylamin, N,N-Dimethyl-stearylamin; von natürlichen Fettsäuregemischen abgeleitete Fettamine, wie insbesondere Cocoalkylamin, N,N-Dimethyl-cocoalkylamin, C₁₆₋₂₂-Alkylamin, N,N-Dimethyl-C₁₆₋₂₂-alkylamin, Soyaalkylamin, N,N-Dimethyl-soyaalkylamin, Oleylamin, N,N-Dimethyl-oleylamin, Talgalkylamin oder N,N-Dimethyl-talgalkylamin, erhältlich beispielsweise unter den Handelsnamen Armeen® (von Akzo Nobel) oder Rofamin® (von Ecogreen Oleochemicals); aliphatische, cycloaliphatische oder araliphatische Diamine wie Ethylendiamin, Butandiamin, Hexamethylendiamin, Dodecandiamin, Neopentandiamin, 2-Methyl-pentamethylendiamin (MPMD), 2,2(4),4-Trimethylhexamethylendiamin (TMD), Isophorondiamin (IPD), 2,5(2,6)-Bis-(aminomethyl)-bicyclo[2.2.1]heptan (NBDA), 1,3-Xylylendiamin (MXDA), N,N'-Di(tert.butyl)ethylendiamin, N,N,N',N'-Tetramethyl-ethylendiamin, N,N,N',N'-Tetramethyl-propylendiamin, N,N,N',N'-Tetramethyl-hexamethylendiamin, 3-Dimethylaminopropylamin, 3-(Methylamino)propylamin, 3-(Cyclohexylamino)propylamin, Piperazin, N-Methylpiperazin, N,N'-Dimethylpiperazin, 1,4-Diazabicyclo[2.2.2]octan, Fettpolyamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, erhältlich beispielsweise unter dem Handelsnamen Duomeen® (von Akzo Nobel); Polyalkylenamine wie Diethylentriamin, Dipropylentriamin, Triethylentetramin (TETA), Tetraethylenpentamin (TEPA), Pentamethylenhexamin (PEHA), 3-(2-Aminoethyl)aminopropylamin, N,N'-Bis(3-aminopropyl)ethylendiamin, N-(3-Aminopropyl)-N-methylpropandiamin, Bis(3-dimethylaminopropyl)amin, N-(3-Dimethylaminopropyl)-1,3-propylendiamin, N-(2-Aminoethyl)piperazin (N-AEP), N-(2-Aminopropyl)piperazin, N,N'-Di-(2-aminoethyl)piperazin, 1-Methyl-4-(2-dimethylaminoethyl)piperazin, N,N,N',N",N"-Pentamethyldiethylentriamin, N,N,N',N",N"-Pentamethyldipropylentriamin, Polyethylenimine, erhältlich beispielsweise unter den Handelsnamen Lupasol® (von BASF) und Epomin® (von Nippon Shokubai); Etheramine, wie insbesondere 2-Methoxyethylamin, 2-Ethoxyethylamin, 3-Methoxypropylamin, 3-Ethoxypropylamin, 3-(2-Ethylhexyloxy)propylamin, 3-(2-Methoxyethoxy)propylamin, 2(4)-Methoxyphenylethylamin, Morpholin, N-Methylmorpholin, N-Ethylmorpholin, 2-Aminoethylmorpholin, Bis(2-aminoethyl)ether, Bis(dimethylaminoethyl)-ether, Bis(dimorpholinoethyl)ether, N,N,N'-Trimethyl-N'-hydroxyethylbis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder 2-Aminopropyl-terminierte Glykole, wie sie beispielsweise unter dem Handelsnamen Jeffamin® (von Huntsman) erhältlich sind; Aminoalkohole, wie insbesondere Ethanolamin, Isopropanolamin, Diethanolamin, Diisopopanolamin, Triethanolamin, Triisopropanolamin, N-Butylethanolamin, Diglykolamin, N,N-Diethylethanolamin, N-Methyldiethanolamin, N-Methyldiisopropylamin, N,N,N'-Trimethylaminoethylethanolamin, N-(3-Dimethylaminopropyl)-N,N-diisopropanolamin, N,N-Bis(3-dimethylaminopropyl)-N-isopropanolamin, 2-(2-Dimethylaminoethoxy)ethanolamin oder Addukte aus Mono- und Polyaminen mit Epoxiden oder Diepoxiden; Phenolgruppen-haltige Amine, wie insbesondere Kondensationsprodukte aus Phenolen, Aldehyden und Aminen (sogenannte Mannich-Basen und Phenalkamine) wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin sowie im Handel unter den Markennamen Cardolite® (von Cardolite), Aradur® (von Huntsman) und Beckopox® (von Cytec) erhältliche Phenalkamine; Amidgruppen-haltige Polyamine, sogenannte Polyamidoamine, wie sie im Handel erhältlich sind, beispielsweise unter den Markennamen Versamid® (von Cognis), Aradur® (von Huntsman), Euretek® (von Huntsman) oder Beckopox® (von Cytec); oder Aminosilane, wie insbesondere 3-Aminopropyltrimethoxysilan, 3-Aminopropyldimethoxymethylsilan, N-(2-Aminoethyl)-3-aminopropyltrimethoxysilan, N-(2-Aminoethyl)-3-aminopropylmethyldimethoxysilan, N-(2-Aminoethyl)-N'-[3-(trimethoxysilyl)propyl]ethylendiamin oder deren Analoga mit Ethoxy- anstelle der Methoxygruppen am Silicium.
Geeignete Hexahydrotriazine sind insbesondere 1,3,5-Hexahydrotriazin oder 1,3,5-Tris(3-(dimethylamino)propyl)-hexahydrotriazin.
Geeignete Biguanide sind insbesondere Biguanid, 1-Butylbiguanid, 1,1-Dimethylbiguanid, 1-Butylbiguanid, 1-Phenylbiguanid oder 1-(o-Tolyl)biguanid (OTBG).

Weiterhin kann die Zusammensetzung als Co-Katalysator eine Säure enthalten, insbesondere eine Carbonsäure. Bevorzugt sind aliphatische Carbonsäuren wie Ameisensäure, Laurinsäure, Stearinsäure, Isostearinsäure, Ölsäure, 2-Ethyl-2,5-dimethylcapronsäure, 2-Ethylhexansäure, Neodecansäure, Fettsäuregemische aus der Verseifung von natürlichen Fetten und Ölen oder Di- und Polycarbonsäuren, insbesondere Poly(meth)acrylsäuren.

Die Zusammensetzung ist in einer bevorzugten Ausführungsform im Wesentlichen frei von Organozinn-Verbindungen. Organozinn-freie Zusammensetzungen sind hinsichtlich Gesundheitsschutz und Umweltschutz vorteilhaft. Insbesondere beträgt der Zinngehalt der härtbaren Zusammensetzung weniger als 0.1 Gew.-%, insbesondere weniger als 0.05 Gew.-%.

Die Zusammensetzung enthält in einer weiteren bevorzugten Ausführungsform eine Kombination aus dem beschriebenen Katalysatorsystem und mindestens einer Organozinn-Verbindung, insbesondere einer Diorganozinn(IV)-Verbindung wie die vorgängig genannten. Eine solche Zusammensetzung weist bereits bei einem geringen Zinn-Gehalt eine hohe Aushärtungsgeschwindigkeit auf, was aus toxikologischen und ökologischen Gründen vorteilhaft ist.

In einer bevorzugten Ausführungsform enthält die Zusammensetzung neben dem beschriebenen Katalysatorsystem zusätzlich mindestens ein Organotitanat. Eine Kombination aus dem mindestens eine aliphatische Amidin- oder Guanidin-Gruppe enthaltenden Katalysator und einem Organotitanat weist eine besonders hohe katalytische Aktivität auf. Dadurch wird eine schnelle Aushärtung einer solchen Zusammensetzung bei einer verhältnismässig geringen Einsatzmenge an Organotitanat ermöglicht.
Als Organotitanat geeignet sind insbesondere Titan(IV)-Komplexverbindungen. Bevorzugte Organoititanate sind insbesondere ausgewählt aus
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy und 2-Ethylhexoxy geeignet sind.

Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).
Ganz besonders geeignete Organotitanate sind ausgewählt aus Bis(ethylacetoacetato)diisobutoxy-titan(IV) (kommerziell erhältlich beispielsweise als Tyzor® IBAY von Dorf Ketal), Bis(ethylacetoacetato)diisopropoxy-titan(IV) (kommerziell erhältlich beispielsweise als Tyzor® DC von Dorf Ketal), Bis(acetylacetonato)diisopropoxy-titan(IV), Bis(acetylacetonato)diisobutoxy-titan(IV), Tris(oxyethyl)-amin-isopropoxy-titan(IV), Bis[tris(oxyethyl)amin]diisopropoxy-titan(IV), Bis(2-ethylhexan-1,3-dioxy)-titan(IV), Tris[2-((2-Aminoethyl)amino)ethoxy]ethoxy-titan(IV), Bis(neopentyl(diallyl)oxy)-diethoxy-titan(IV), Titan(IV)-tetrabutanolat, Tetra(2-ethylhexyloxy)titanat, Tetra(isopropoxy)titanat und Polybutyltitanat. Am meisten bevorzugt sind Bis(ethylacetoacetato)diisobutoxy-titan(IV) oder Bis(ethylacetoacetato)diisopropoxy-titan(IV).

Die Zusammensetzung kann weitere Bestandteile enthalten, insbesondere die folgenden Hilfs- und Zusatzmittel:
- Haftvermittler und/oder Vernetzer, insbesondere Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-dimethoxymethylsilan, N-(2-Aminoethyl)-N'-[3-(trimethoxysilyl)propyl]ethylendiamin oder deren Analoga mit Ethoxy- anstelle von Methoxygruppen, weiterhin N-Phenyl-, N-Cyclohexyl- oder N-Alkylaminosilane, Mercaptosilane, Epoxysilane, (Meth)acrylosilane, Anhydridosilane, Carbamatosilane, Alkylsilane oder Iminosilane, oligomere Formen dieser Silane, Addukte aus primären Aminosilanen mit Epoxysilanen oder (Meth)acrylosilanen oder Anhydridosilanen, aminofunktionelle Alkylsilsesquioxane, insbesondere aminofunktionelles Methylsilsesquioxan oder aminofunktionelles Propylsilsesquioxan. Insbesondere geeignet sind 3-Aminopropyltrimethoxysilan, 3-Aminopropyltriethoxysilan, N-(2-Aminoethyl)-3-aminopropyltrimethoxysilan, N-(2-Aminoethyl)-3-aminopropyl-triethoxysilan, 3-Glycidoxypropyltrimethoxysilan, 3-Glycidoxypropyltriethoxysilan oder 3-Ureidopropyltrimethoxysilan, oder oligomere Formen dieser Silane;
- Trocknungsmittel, insbesondere Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, Calciumoxid oder Molekularsiebe, insbesondere Vinyltrimethoxysilan oder Vinyltriethoxysilan;
- Weichmacher, insbesondere Trialkylsilyl-terminierte Polydialkylsiloxane, vorzugsweise Trimethylsilyl-terminierte Polydimethylsiloxane, insbesondere mit Viskositäten im Bereich von 10 bis 1'000 mPa·s, oder entsprechende Verbindungen, bei denen einige der Methylgruppen ersetzt sind durch andere organische Gruppen, insbesondere Phenyl-, Vinyl- oder Trifluorpropylgruppen, sogenannte Reaktivweichmacher in Form von monofunktionellen, also einseitig reaktiven, Polysiloxanen, Carbonsäureester wie Phthalate, insbesondere Dioctylphthalat, Bis(2-ethylhexyl)phthalat, Bis(3-propylheptyl)-phthalat, Diisononylphthalat oder Diisodecylphthalat, Diester von ortho-Cyclohexandicarbonsäure, insbesondere Diisononyl-1,2-cyclohexandicarboxylat, Adipate, insbesondere Dioctyladipat, Bis(2-Ethylhexyl)adipat, Azelate, insbesondere Bis(2-ethylhexyl)acelat, Sebacate, insbesondere Bis(2-ethylhexyl)sebacat oder Diisononylsebacat, Polyole, insbesondere Polyoxyalkylenpolyole oder Polyesterpolyole, Glykolether, Glykolester, organische Phosphor- oder Sulfonsäureester, Sulfonsäureamide, Polybutene oder von natürlichen Fetten oder Ölen abgeleitete Fettsäuremethyl- oder -ethylester, auch "Biodiesel" genannt, wobei Siloxangruppen-haltige Weichmacher besonders geeignet sind für Silangruppen-haltige Polymere in Form von Polyorganosiloxanen;
- Lösemittel;
- anorganische oder organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene;
- Stabilisatoren gegen Oxidation, Wärme, Licht oder UV-Strahlung;
- natürliche Harze, Fette oder Öle wie Kolophonium, Schellack, Leinöl, Rizinusöl oder Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid und Magnesiumhydroxid, oder insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in härtbaren Zusammensetzungen eingesetzte Substanzen. Es kann sinnvoll sein, gewisse Bestandteile vor dem Einmischen in die Zusammensetzung chemisch oder physikalisch zu trocknen.

In einer bevorzugten Ausführungsform enthält die Zusammensetzung mindestens ein Trocknungsmittel und mindestens einen Haftvermittler und/oder Vernetzer.
In einer bevorzugten Ausführungsform enthält die Zusammensetzung keine Phthalate als Weichmacher. Solche Zusammensetzungen sind toxikologisch vorteilhaft und weisen weniger Probleme mit Migrationseffekten auf.

Die Zusammensetzung wird vorzugsweise unter Ausschluss von Feuchtigkeit hergestellt und aufbewahrt. Typischerweise ist sie in einer geeigneten Verpackung oder Anordnung, wie insbesondere einer Flasche, einer Büchse, einem Beutel, einem Eimer, einem Fass oder einer Kartusche, unter Ausschluss von Feuchtigkeit lagerstabil.

Die Zusammensetzung kann in Form einer einkomponentigen oder in Form einer mehrkomponentigen, insbesondere zweikomponentigen, Zusammensetzung vorliegen.
Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist. Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, gegebenenfalls unter Einwirkung von Feuchtigkeit.
Für den Fall, dass die Zusammensetzung ein Polyorganosiloxan mit endständigen Silangruppen enthält, ist sowohl eine einkomponentige Zusammensetzung, auch als RTV-1 bezeichnet, als auch eine zweikomponentige Zusammensetzung, auch als RTV-2 bezeichnet, bevorzugt. Im Fall einer RTV-2 Zusammensetzung ist das Polyorganosiloxan mit endständigen Silangruppen bevorzugt ein Bestandteil der ersten Komponente und ein Silanvernetzer, insbesondere ein Silanvernetzer der Formel (VI), ist bevorzugt ein Bestandteil der zweiten Komponente. Das beschriebene Katalysatorsystem kann dabei in der ersten und/oder in der zweiten Komponente enthalten sein. Es ist auch möglich, dass der mindestens eine aliphatische Amidin- oder Guanidin-Gruppe aufweisende Katalysator und die basische Metallverbindung in getrennten Komponenten vorliegen.
Für den Fall, dass die Zusammensetzung ein Silangruppen-haltiges organisches Polymer enthält, ist die Zusammensetzung bevorzugt einkomponentig.

Eine zweite oder gegebenenfalls weitere Komponenten wird bzw. werden mit der ersten Komponente vor oder bei der Applikation vermischt, insbesondere über einen Statikmischer oder über einen dynamischen Mischer.
Die Zusammensetzung wird insbesondere umgebungswarm, bevorzugt in einem Temperaturbereich zwischen 0 °C und 45 °C, insbesondere 5 °C bis 35 °C, appliziert und härtet auch bei diesen Bedingungen aus.
Bei der Applikation beginnt die Vernetzungsreaktion der Silangruppen, gegebenenfalls unter Einfluss von Feuchtigkeit. Vorhandene Silangruppen können mit vorhandenen Silanolgruppen zu Siloxangruppen (Si-O-Si-Gruppen) kondensieren. Vorhandene Silangruppen können bei Kontakt mit Feuchtigkeit auch zu Silanolgruppen (Si-OH-Gruppen) hydrolysieren und durch nachfolgende Kondensationsreaktionen Siloxangruppen (Si-O-Si-Gruppen) bilden. Als Ergebnis dieser Reaktionen härtet die Zusammensetzung schliesslich aus. Das Silan der Formel (I) beschleunigt diese Aushärtung.
Falls für die Aushärtung Wasser benötigt wird, kann dieses entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation Wasser oder eine Wasser enthaltende Komponente zugesetzt werden, zum Beispiel in Form einer wasserhaltigen oder Wasser freisetzenden Flüssigkeit oder Paste. Eine Paste ist insbesondere geeignet für den Fall, dass die Zusammensetzung selber in Form einer Paste vorliegt.
Bei einer Aushärtung mittels Luftfeuchtigkeit härtet die Zusammensetzung von aussen nach innen durch, wobei zunächst eine Haut an der Oberfläche der Zusammensetzung gebildet wird. Die sogenannte Hautbildungszeit stellt ein Mass für die Aushärtungsgeschwindigkeit der Zusammensetzung dar. Die Geschwindigkeit der Aushärtung wird dabei im Allgemeinen von verschiedenen Faktoren, wie beispielsweise der Verfügbarkeit von Wasser, der Temperatur usw., bestimmt.

Die Zusammensetzung eignet sich für eine Vielzahl von Anwendungen, insbesondere als Anstrich, Lack oder Primer, als Harz zur Herstellung von Faserverbundwerkstoff (Composite), als Hartschaum, Weichschaum, Formteil, Elastomer, Faser, Folie oder Membran, als Vergussmasse, Dichtstoff, Klebstoff, Belag, Beschichtung oder Anstrich für Bau- und Industrieanwendungen, beispielsweise als Nahtabdichtung, Hohlraumversiegelung, Elektroisolationsmasse, Spachtelmasse, Fugendichtstoff, Schweiss- oder Bördelnahtdichtstoff, Montageklebstoff, Karrosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag, Bodenbeschichtung, Balkonbeschichtung, Dachbeschichtung, Betonschutzbeschichtung, Parkhausbeschichtung, Versiegelung, Rohrbeschichtung, Korrosionsschutzbeschichtung, Textilbeschichtung, Dämpfungselement, Dichtungselement oder Spachtelmasse.

Besonders geeignet ist die Zusammensetzung als Klebstoff und/oder Dichtstoff, insbesondere für die Fugenabdichtung und für elastische Klebeverbindungen in Bau- und Industrieanwendungen, sowie als elastische Beschichtung mit rissüberbrückenden Eigenschaften, insbesondere zum Schützen und/oder Abdichten von beispielsweise Dächern, Böden, Balkonen, Parkdecks oder Betonröhren.
Bevorzugt stellt die Zusammensetzung somit einen Klebstoff oder einen Dichtstoff oder eine Beschichtung dar.

Eine solche Zusammensetzung enthält typischerweise Weichmacher, Füllstoffe, Haftvermittler und/oder Vernetzer und Trocknungsmittel und gegebenenfalls weitere Hilfs- und Zusatzstoffe.
Für eine Anwendung als Klebstoff oder Dichtstoff weist die Zusammensetzung bevorzugt eine pastöse Konsistenz mit strukturviskosen Eigenschaften auf. Ein solcher pastöser Dichtstoff oder Klebstoff wird insbesondere aus handelsüblichen Kartuschen, welche manuell, mittels Druckluft oder Batterie betrieben werden, oder aus einem Fass oder Hobbock mittels einer Förderpumpe oder eines Extruders, gegebenenfalls mittels eines Applikationsroboters, auf ein Substrat aufgetragen.
Für eine Anwendung als Beschichtung weist die Zusammensetzung bevorzugt eine bei Raumtemperatur flüssige Konsistenz mit selbstverlaufenden Eigenschaften auf. Gegebenenfalls ist sie leicht thixotrop, so dass die Beschichtung an abschüssigen bis senkrechten Flächen applizierbar ist, ohne sofort wegzufliessen. Sie wird insbesondere appliziert mittels Rolle oder Pinsel oder durch Ausgiessen und Verteilen mittels beispielsweise einem Roller, einem Schaber oder einer Zahntraufel.

Bei der Applikation wird die Zusammensetzung bevorzugt auf mindestens ein Substrat appliziert.
Geeignete Substrate sind insbesondere
- Glas, Glaskeramik, Beton, Mörtel, Backstein, Ziegel, Gips oder Natursteine wie Kalkstein, Granit oder Marmor;
- Metalle und Legierungen, wie Aluminium, Eisen, Stahl oder Buntmetalle, sowie oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) oder Ethylen/Propylen/Dien-Terpolymere (EPDM), oder faserverstärkte Kunststoffe wie Kohlefaserverstärkte Kunststoffe (CFK), Glasfaser-verstärkte Kunststoffe (GFK) oder Sheet Moulding Compounds (SMC), wobei die Kunststoffe bevorzugt mittels Plasma, Corona oder Flammen oberflächenbehandelt sein können;
- beschichtete Substrate, wie pulverbeschichtete Metalle oder Legierungen;
- Farben oder Lacke, insbesondere Automobildecklacke.
Die Substrate können bei Bedarf vor dem Applizieren vorbehandelt werden, insbesondere durch physikalische und/oder chemische Reinigungsverfahren oder das Aufbringen eines Aktivators oder eines Primers.
Besonders geeignet ist eine Zusammensetzung, welche einen bevorzugten Katalysatoren der Formel (I), bei welchem A für einen Polyoxyalkylen-Rest oder für einen Rest einer polyoxyalkylierten Verbindung mit jeweils einem mittleren Molekulargewicht im Bereich von 180 bis 500 g/mol steht, für den Kontakt mit Substraten, die besonders empfindlich sind auf Störungen durch migrierende Substanzen, insbesondere durch das Ausbilden von Verfärbungen oder Flecken. Dies sind insbesondere feinporige Substrate wie Marmor, Kalkstein oder andere Natursteine, Gips, Zementmörtel oder Beton, aber auch Kunststoffe. Insbesondere auf PVC werden bei der Anwesenheit von migrierenden Katalysatoren wie beispielsweise 1,8-Diazabicyclo[5.4.0]undec-7-en (DBU) oder 1,1,3,3-Tetramethylguanidin (TMG) starke Verfärbungen beobachtet, die sich durch Reinigung nicht entfernen lassen. Solche Effekte werden mit diesen bevorzugten Katalysatoren nicht beobachtet.

Verklebt oder abgedichtet werden können zwei gleichartige oder zwei verschiedene Substrate, insbesondere die vorgängig genannten Substrate.

Nach der Aushärtung der Zusammensetzung mit Wasser, insbesondere in Form von Luftfeuchtigkeit, und/oder mit mindestens einem geeigneten Vernetzer wird eine ausgehärtete Zusammensetzung erhalten.

Aus der Anwendung der Zusammensetzung entsteht ein Artikel, welcher mit der Zusammensetzung insbesondere verklebt, abgedichtet oder beschichtet wurde. Beim Artikel handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter; oder der Artikel kann ein Anbauteil davon sein.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet.

Die **Hautbildungszeit** wurde bestimmt, indem einige Gramm der Zusammensetzung in einer Schichtdicke von ca. 2 mm auf Pappkarton aufgetragen wurden und im Normklima die Zeitdauer gemessen wurde, bis beim leichten Antippen der Oberfläche der Zusammensetzung mittels einer Pipette aus LDPE erstmals keine Rückstände auf der Pipette mehr zurückblieben.

Die mechanischen Eigenschaften **Zugfestigkeit**, **Bruchdehnung** und **E-Modul** (bei 0.5-100% Dehnung) wurden gemäss DIN EN 53504 bei einer Zuggeschwindigkeit von 200 mm/min gemessen.
Die **Shore A** Härte wurde bei Raumtemperatur bestimmt nach DIN 53505.

### Herstellung von Katalysatoren:

**Katalysator K-1:** 1,1'-(α,ω)-Polyoxypropylen)bis(2,3-dicyclohexylguanidin) mit einem mittleren Molekulargewicht von etwa 850 g/mol
In einem Rundkolben wurden 10.54 g Polyoxypropylendiamin mit einem mittleren Molekukargewicht von ca. 430 g/mol (Jeffamine® D-400 von Huntsman, Amingehalt ca. 4.4 meq/g) und 8.23 g N,N'-Dicyclohexylcarbodiimid vermischt und die Mischung unter Rühren auf 120 °C erwärmt. In regelmässigen Abständen wurde das Reaktionsgemisch mittels FT-IR-Spektroskopie untersucht. Nach 24 Stunden war die Carbodiimid-Bande bei ca. 2120 cm⁻¹ vollständig verschwunden. Darauf wurde das Reaktionsgemisch im Vakuum von den flüchtigen Bestandteilen befreit. Man erhielt 18.77 g eines hellgelben, geruchlosen Öls.

### Herstellung von Silangruppen-haltigen Polyethern:

### Polymer STP-1:

Unter Feuchtigkeitsausschluss wurden 1000 g Polyol Acclaim® 12200 (Polyoxypropylendiol mit niedrigem Ungesättigtheitsgrad, von Bayer; OH-Zahl 11.0 mg KOH/g), 43.6 g Isophorondiisocyanat (IPDI; Vestanat® IPDI, von Evonik), 126.4 g Diisodecylphthalat (DIDP) und 0.1 g Bismuttris(neodecanoat) (10 Gew.-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0.64 Gew.-% erreicht hatte. Anschliessend wurden 70.6 g N-(3-Triethoxysilylpropyl)-amino-bernsteinsäurediethylester (Addukt aus 3-Aminopropyltriethoxysilan und Maleinsäurediethylester; hergestellt nach den Angaben in US 5,364,955) eingemischt und die Mischung bei 90 °C solange gerührt, bis mittels FT-IR-Spektroskopie kein freies Isocyanat mehr nachgewiesen wurde. Der so erhaltene Triethoxysilangruppen-haltige Polyether mit einem Silan-Equivalentgewicht von ca. 6920 g/Eq (aus den Einsatzmengen berechnet) wurde auf Raumtemperatur abgekühlt und unter Ausschluss von Feuchtigkeit aufbewahrt.

### Verwendete Moderatoren:

- CaO: Calciumoxid, Caloxol® CPA (von Omya)
- Na₂CO₃: Natriumcarbonat (von Sigma Aldrich), gemahlen

### Verwendete Metallkatalysatoren:

- IBAY: Tyzor® IBAY, Bis(ethylacetoacetato)diisobutoxy-titan(IV), von Dorf Ketal

### Zusammensetzungen auf Basis von Silangruppen-haltigen Polymeren:

### Zusammensetzungen Z1 und Z2 und Z3 (Vergleich) und Ref-1 (Vergleich):

In einem Planetenmischer wurden 240 g Polymer STP-1, 148 g Diisodecylphthalat, 13 g Vinyltriethoxysilan, 40 g Thixotropierpaste, deren Herstellung nachfolgend beschrieben ist, 34 g Titandioxid (Kronos® 2500, von Kronos), 500 g gefällte Kreide (Socal® U1S2, von Solvay), 10 g pyrogene Kieselsäure (Aerosil® R 972, von Evonik), 10 g 3-Aminopropyltriethoxysilan, sowie verschiedene Katalysatoren und gegebenenfalls einen Moderator in den angegebenen Mengen gemäss Tabelle 1 vermengt, zu einer homogenen Paste verarbeitet und unter Ausschluss von Feuchtigkeit aufbewahrt.

Die Thixotropierpaste wurde hergestellt, indem in einem Planetenmischer 300 g Diisodecylphthalat und 48 g 4,4'-Methylendiphenyldiisocyanat (Desmodur® 44 MC L, von Bayer) vorgelegt und leicht aufgewärmt und anschliessend unter starkem Rühren 27 g n-Butylamin langsam zugetropft wurden. Die entstehende Paste wurde unter Vakuum und Kühlung eine Stunde weitergerührt.

Jede Zusammensetzung wurde auf Hautbildungszeit im Normklima geprüft, sowohl frisch als auch nach einer Lagerzeit im verschlossenen Gebinde von 7 Tagen bei 60 °C ("7d 60°C"), bzw. 1 Monat bei Raumtemperatur ("1 Mt RT"), bzw. 3 Monate bei Raumtemperatur ("3 Mt RT"). Die Hautbildungszeit dient dabei als Mass für die Aktivität des Katalysators in Bezug auf die Vernetzungsreaktion der Silangruppen, d.h. für die Vernetzungsgeschwindigkeit. Weiterhin wurde von jeder Zusammensetzung ein Film von 2 mm Dicke hergestellt, während 7 Tagen im Normklima aushärten lassen und auf mechanische Eigenschaften geprüft.
Weiterhin wurden von jeder Zusammensetzung zwei Shore A Prüfkörper hergestellt und während 7 Tagen im Normklima (NK) ("7d NK") bzw. während 7 Tagen im Normklima gefolgt von 7 Tagen in einem Umluftofen bei 100 °C ("7d 100°C") gelagert.
Die Ergebnisse sind in den Tabellen 1 und 2 wiedergegeben.

**Tabelle 1:**

| **Zusammensetzung** | **Katalysatoren** | | **Moderator** | **Hautbildungszeit frisch 7d60°C 1 Mt RT 3 Mt RT** | | | |
|---|---|---|---|---|---|---|---|
| **Z1** *F2143-3* | K-1 5 g | IBAY 5 g | CaO 10 g | 33' | 35' | 31' | 30' |
| **Z2** *F2143-4* | K-1 5 g | IBAY 5 g | CaO 20 g | 31' | 26' | 30' | 27' |
| **Z3** (Ref.) *F2142-4* | K-1 5 g | IBAY 5 g | Na₂CO₃ 2 g | 35' | 22' | 24' | 24' |
| **Ref-1** *F2152-1* | K-1 5 g | IBAY 5 g | - | 59' | 61' | 50' | 31' |

**Tabelle 2:**

| **Zusammensetzung** | **Zugfestigkeit** | **Bruchdehnung** | **E-Modul** (0.5-100%) | **Shore A 7d RT 7d 100°C** | |
|---|---|---|---|---|---|
| **Z1** | 2.7 MPa | 850 % | 0.77 MPa | 51 | 49 |
| **Z2** | 2.6 MPa | 800 % | 0.82 MPa | 52 | 50 |
| **Z3** (Ref.) | 2.2 MPa | 680 % | 0.80 MPa | 51 | 51 |
| **Ref-1** | 2.9 MPa | 810 % | 0.74 MPa | 49 | 44 |

## Patentansprüche

1. Verwendung eines Katalysatorsystems umfassend,
- mindestens einen Katalysator enthaltend mindestens eine aliphatische Amidin- oder Guanidin-Gruppe, und
- mindestens einen Moderator in Form einer basischen Metallverbindung,
für die Vernetzung von Zusammensetzungen auf Basis von Silangruppen-haltigen Polymeren,
**dadurch gekennzeichnet, dass** die basische Metallverbindung ausgewählt ist aus Oxiden, Carbonaten, Hydrogencarbonaten, Silicaten, Metasilicaten, Phosphaten und Pyrophosphaten von Alkali- oder Erdalkalimetallen, wobei die basische Metallverbindung Calciumoxid enthält oder daraus besteht.

2. Verwendung gemäss Anspruch 1, **dadurch gekennzeichnet, dass** die aliphatische Amidin- oder Guanidin-Gruppe eine Amidin- oder Guanidin-Gruppe Z der Formel 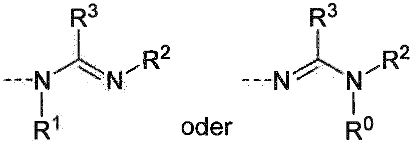 ist, wobei
R⁰ für einen Wasserstoff-Rest oder für einen Alkyl- oder Cycloalkyl- oder Aralkyl-Rest mit 1 bis 8 C-Atomen steht,
R¹ für einen Wasserstoff-Rest oder für einen Alkyl- oder Cycloalkyl- oder Aralkyl-Rest mit 1 bis 8 C-Atomen oder zusammen mit R² für R⁶ steht,
R² für einen Wasserstoff-Rest oder für einen Alkyl-, Cycloalkyl- oder Aralkyl-Rest mit 1 bis 18 C-Atomen, welcher gegebenenfalls Ether-Sauerstoff oder tertiären Amin-Stickstoff enthält, oder zusammen mit R¹ für R⁶ steht,
R³ für -NR⁴R⁵ oder für einen Wasserstoff-Rest oder für einen Alkyl- oder Cycloalkyl- oder Aralkyl-Rest mit 1 bis 12 C-Atomen steht,
wobei
R⁴ und R⁵ unabhängig voneinander jeweils für einen Wasserstoff-Rest oder für einen Alkyl-, Cycloalkyl- oder Aralkyl-Rest mit 1 bis 18 C-Atomen, welcher gegebenenfalls Ether-Sauerstoff oder tertiären Amin-Stickstoff enthält, stehen,
R⁶ für einen gegebenenfalls substituierten 1,2-Ethylen-, 1,3-Propylen- oder 1,4-Butylen-Rest mit 2 bis 12 C-Atomen steht,
wobei
R² und R⁰ auch zusammen für einen Alkylen-Rest mit 3 bis 6 C-Atomen, welcher gegebenenfalls Ether-Sauerstoff oder tertiären Amin-Stickstoff enthält, stehen können,
R² und R³ auch zusammen für einen Alkylen-Rest mit 3 bis 6 C-Atomen stehen können,
R⁴ und R⁵ auch zusammen für einen Alkylen-Rest mit 4 bis 7 C-Atomen, welcher gegebenenfalls Ether-Sauerstoff oder tertiären Amin-Stickstoff enthält enthält, stehen können, und
R² und R⁵ auch zusammen für einen Alkylen-Rest mit 2 bis 12 C-Atomen stehen können.

3. Verwendung gemäss Anspruch 2, **dadurch gekennzeichnet, dass** R³ für -NR⁴R⁵ steht.

4. Verwendung gemäss Anspruch 3, **dadurch gekennzeichnet, dass** R¹, R⁰ und R⁴ jeweils für einen Wasserstoff-Rest und R² und R⁵ unabhängig voneinenaner jeweils für einen Alkyl-, Cycloalkyl- oder Aralkyl-Rest mit 1 bis 12 C-Atomen, welcher gegebenenfalls einen Ether-Sauerstoff oder tertiären Amin-Stickstoff enthält, stehen.

5. Verwendung gemäss einem der Ansprüche 2 bis 4, **dadurch gekennzeichnet, dass** der Katalysator die Formel (I) aufweist,
A⁅Z]ₙ (I)
wobei
n für eine ganze Zahl von 1 bis 20 steht, und
A für einen n-wertigen aliphatischen oder cycloaliphatischen oder arylaliphatischen Kohlenwasserstoff-Rest mit 1 bis 100 C-Atomen, welcher gegebenenfalls ungesättigte Anteile enthält und gegebenenfalls Heteroatome enthält, oder für einen n-wertigen alkylterminierten Siloxan- oder Polysiloxan-Rest mit 2 bis 100 Siliciumatomen steht,
wobei jedes Z durch mindestens 2 C-Atome von jedem anderen Z getrennt ist.

6. Verwendung gemäss Anspruch 5, **dadurch gekennzeichnet, dass** A für einen zweiwertigen aliphatischen oder cycloaliphatischen oder arylaliphatischen Kohlenwasserstoff-Rest mit 2 bis 12 C-Atomen steht.

7. Verwendung gemäss Anspruch 5, **dadurch gekennzeichnet, dass** A für einen n-wertigen Polyoxyalkylen-Rest oder für einen Rest einer polyoxyalkylierten Verbindung mit jeweils einem mittleren Molekulargewicht im Bereich von 180 bis 500 g/mol und n 1 oder für 2 oder 3 stehen.

8. Verwendung gemäss Anspruch 7, **dadurch gekennzeichnet, dass** Z wie in Anspruch 4 beschrieben definiert ist.

9. Verwendung gemäss einem der vorhergehenden Ansprüche, **dadurch gekennzeichnet, dass** das Gewichtsverhältnis zwischen der basischen Metallverbindung und dem mindestens eine aliphatische Amidin- oder Guanidin-Gruppe enthaltenden Katalysator im Bereich von 0.1/1 bis 20/1 liegt.

10. Verwendung gemäss einem der vorhergehenden Ansprüche, **dadurch gekennzeichnet, dass** das Silangruppen-haltige Polymer ausgewählt ist aus der Gruppe bestehend aus Polyorganosiloxanen mit endständigen Silangruppen und Silangruppen-haltigen organischen Polymeren.

11. Verwendung gemäss Anspruch 10, **dadurch gekennzeichnet, dass** das Silangruppen-haltige Polymer ein bei Raumtemperatur flüssiger Silangruppen-haltiger Polyether ist.

12. Härtbare Zusammensetzung enthaltend mindestens ein Silangruppen-haltiges Polymer und ein Katalysatorsystem wie in einem der Ansprüche 1 bis 9 beschrieben.

13. Zusammensetzung gemäss Anspruch 12, **dadurch gekennzeichnet, dass** sie einen Klebstoff oder einen Dichtstoff oder eine Beschichtung darstellt.

## Claims

1. Use of a catalyst system comprising
- at least one catalyst containing at least one aliphatic amidine or guanidine group, and
- at least one moderator in the form of a basic metal compound,
for crosslinking compositions based on polymers containing silane groups,
**characterized in that** the basic metal compound is selected from oxides, carbonates, hydrogencarbonates, silicates, metal silicates, phosphates and pyrophosphates of alkali metals or alkaline earth metals, the basic metal compound comprising or consisting of calcium oxide.

2. Use according to Claim 1, **characterized in that** the aliphatic amidine or guanidine group is an amidine or guanidine group Z of the formula 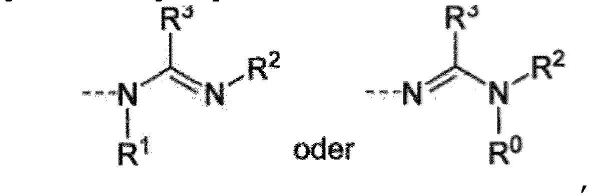 where
R⁰ is a hydrogen radical or is an alkyl or cycloalkyl or aralkyl radical having 1 to 8 C atoms,
R¹ is a hydrogen radical or is an alkyl or cycloalkyl or aralkyl radical having 1 to 8 C atoms, or together with R² is R⁶,
R² is a hydrogen radical or is an alkyl, cycloalkyl or aralkyl radical having 1 to 18 C atoms, which optionally contains ether oxygen or tertiary amine nitrogen, or together with R¹ is R⁶,
R³ is -NR⁴R⁵ or is a hydrogen radical or is an alkyl or cycloalkyl or aralkyl radical having 1 to 12 C atoms,
where
R⁴ and R⁵ independently of one another in each case are a hydrogen radical or are an alkyl, cycloalkyl or aralkyl radical having 1 to 18 C atoms, which optionally contains ether oxygen or tertiary amine nitrogen,
R⁶ is an optionally substituted 1,2-ethylene, 1,3-propylene or 1,4-butylene radical having 2 to 12 C atoms,
where
R² and R⁰ may also together be an alkylene radical having 3 to 6 C atoms which optionally contains ether oxygen or tertiary amine nitrogen,
R² and R³ together may also be an alkylene radical having 3 to 6 C atoms,
R⁴ and R⁵ may also together be an alkylene radical having 4 to 7 C atoms which optionally contains ether oxygen or tertiary amine nitrogen, and
R² and R⁵ together may also be an alkylene radical having 2 to 12 C atoms.

3. Use according to Claim 2, **characterized in that** R³ is -NR⁴R⁵.

4. Use according to Claim 3, **characterized in that** R¹, R⁰ and R⁴ are each a hydrogen radical and R² and R⁵ independently of one another are each an alkyl, cycloalkyl or aralkyl radical having 1 to 12 C atoms which optionally contains an ether oxygen or tertiary amine nitrogen.

5. Use according to any of Claims 2 to 4, **characterized in that** the catalyst has the formula (I)
A⁅Z]ₙ (I)
where
n is an integer from 1 to 20, and
A is an n-valent aliphatic or cycloaliphatic or arylaliphatic hydrocarbon radical having 1 to 100 C atoms which optionally contains unsaturated fractions and optionally contains heteroatoms, or is an n-valent, alkyl-terminated siloxane or polysiloxane radical having 2 to 100 silicon atoms,
where Z is separated from any other Z by at least 2 C atoms.

6. Use according to Claim 5, **characterized in that** A is a divalent aliphatic or cycloaliphatic or arylaliphatic hydrocarbon radical having 2 to 12 C atoms.

7. Use according to Claim 5, **characterized in that** A is an n-valent polyoxyalkylene radical or is a radical of a polyoxyalkylated compound having in each case an average molecular weight in the range from 180 to 500 g/mol, and n is 1 or is 2 or 3.

8. Use according to Claim 7, **characterized in that** Z is defined as described in Claim 4.

9. Use according to any of the preceding claims, **characterized in that** the weight ratio between the basic metal compound and the catalyst containing at least one aliphatic amidine or guanidine group is in the range from 0.1/1 to 20/1.

10. Use according to any of the preceding claims, **characterized in that** the polymer containing silane groups is selected from the group consisting of polyorganosiloxanes having terminary silane groups and of organic polymers containing silane groups.

11. Use according to Claim 10, **characterized in that** the polymer containing silane groups is a polyether containing silane groups which is liquid at room temperature.

12. Curable composition comprising at least one polymer containing silane groups and a catalyst system as described in any of Claims 1 to 9.

13. Composition according to Claim 12, **characterized in that** it represents an adhesive or a sealant or a coating.

## Revendications

1. Utilisation d'un système de catalyseur comprenant,
- au moins un catalyseur contenant au moins un groupe aliphatique amidine ou guanidine, et
- au moins un modérateur sous forme d'un composé métallique basique,
pour la réticulation de compositions à base de polymère contenant des groupes silane,
**caractérisée en ce que** le composé métallique basique est choisi parmi des oxydes, des carbonates, des hydrogénocarbonates, des silicates, des métasilicates, des phosphates et des pyrophosphates de métaux alcalins ou alcalino-terreux, le composé métallique basique contenant ou étant constitué d'oxyde de calcium.

2. Utilisation selon la revendication 1, **caractérisée** ce que le groupe aliphatique amidine ou guanidine est un groupe Z amidine ou guanidine de formule 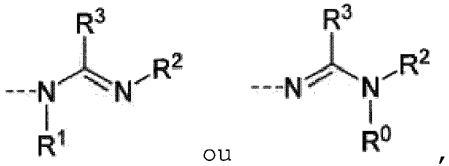
R⁰ représentant un radical hydrogène ou un radical alkyle ou cycloalkyle ou aralkyle comportant 1 à 8 atome(s) de C,
R¹ représentant un radical hydrogène ou un radical alkyle ou cycloalkyle ou aralkyle comportant 1 à 8 atome(s) de C ou, ensemble avec R², représentant R⁶,
R² représentant un radical hydrogène ou un radical alkyle ou cycloalkyle ou aralkyle comportant 1 à 18 atome(s) de C, qui contient éventuellement de l'oxygène d'éther ou de l'azote d'amine tertiaire, ou, ensemble avec R¹, représentant R⁶,
R³ représentant -NR⁴R⁵ ou un radical hydrogène ou un radical alkyle ou cycloalkyle ou aralkyle comportant 1 à 12 atome(s) de C,
R⁴ et R⁵, indépendamment l'un de l'autre à chaque fois, représentant un radical hydrogène ou un radical alkyle, cycloalkyle ou aralkyle comportant 1 à 18 atome(s) de C, qui contient éventuellement de l'oxygène d'éther ou de l'azote d'amine tertiaire,
R⁶ représentant un radical 1,2-éthylène, 1,3-propylène ou 1,4-butylène éventuellement substitué comportant 2 à 12 atomes de C,
R² et R⁰ pouvant également représenter ensemble un radical alkylène comportant 3 à 6 atomes de C, qui contient éventuellement de l'oxygène d'éther ou de l'azote d'amine tertiaire,
R² et R³ pouvant également représenter ensemble un radical alkylène comportant 3 à 6 atomes de C,
R⁴ et R⁵ pouvant également représenter ensemble un radical alkylène comportant 4 à 7 atomes de C, qui contient éventuellement de l'oxygène d'éther ou de l'azote d'amine tertiaire, et
R² et R⁵ pouvant également représenter ensemble un radical alkylène comportant 2 à 12 atomes de C.

3. Utilisation selon la revendication 2, **caractérisée en ce que** R³ représente -NR⁴R⁵.

4. Utilisation selon la revendication 3, **caractérisée en ce que** R¹, R⁰ et R⁴ représentent à chaque fois un radical hydrogène et R² et R⁵ représentent indépendamment l'un de l'autre à chaque fois un radical alkyle, cycloalkyle ou aralkyle comportant 1 à 12 atomes de C, qui contient éventuellement de l'oxygène d'éther ou de l'azote d'amine tertiaire.

5. Utilisation selon l'une quelconque des revendications 2 à 4, **caractérisée en ce que** le catalyseur présente la formule (I),
A⁅Z]ₙ (I)
n représentant un nombre entier de 1 à 20, et
A représentant un radical hydrocarboné n-valent aliphatique ou cycloaliphatique ou arylaliphatique comportant 1 à 100 atome (s) de C, qui contient éventuellement des parties insaturées et éventuellement des hétéroatomes, ou représentant un radical n-valent siloxane ou polysiloxane, terminé par alkyle, comportant 2 à 100 atomes de silicium,
chaque Z étant séparé de chaque autre Z par au moins 2 atomes de C.

6. Utilisation selon la revendication 5, **caractérisée en ce que** A représente un radical hydrocarboné divalent aliphatique ou cycloaliphatique ou arylaliphatique comportant 2 à 12 atomes de C.

7. Utilisation selon la revendication 5, **caractérisée en ce que** A représente un radical polyoxyalkylène n-valent ou un radical d'un composé polyoxyalkylé doté à chaque fois d'un poids moléculaire moyen dans la plage de 180 à 500 g/mole et n représente 1 ou 2 ou 3.

8. Utilisation selon la revendication 7, **caractérisée en ce que** Z est défini tel que décrit dans la revendication 4.

9. Utilisation selon l'une quelconque des revendications précédentes, **caractérisée en ce que** le rapport pondéral entre le composé métallique basique et le catalyseur contenant au moins un groupe aliphatique amidine ou guanidine se situe dans la plage de 0,1/1 à 20/1.

10. Utilisation selon l'une quelconque des revendications précédentes, **caractérisée en ce que** le polymère contenant des groupes silane est choisi dans le groupe constitué par des polyorganosiloxanes dotés de groupes silane terminaux et des polymères organiques contenant des groupes silane.

11. Utilisation selon la revendication 10, **caractérisée en ce que** le polymère contenant des groupes silane est un polyéther liquide à température ambiante contenant des groupes silane.

12. Composition durcissable contenant au moins un polymère contenant des groupes silane et un système de catalyseur tel que décrit selon l'une quelconque des revendications 1 à 9.

13. Composition selon la revendication 12, **caractérisée en ce qu'**elle représente un adhésif ou un agent d'étanchéité ou un revêtement.
